# EUROPÄISCHE PATENTSCHRIFT

(11) **EP 2 006 224 B1**
(45) Veröffentlichungstag und Bekanntmachung des Hinweises auf die Patenterteilung: **09.03.2011**
(21) Anmeldenummer: 08011383.0
(22) Anmeldetag: 23.06.2008
(51) Int. Cl.: B65G 1/127, B65G 65/00, B23Q 7/14

(54) **Automatisches Handling von Mehrfachlagergutträgern**
Automatic handling of multiple bearing good carriers
Manipulation automatique de supports pour marchandises multiples

(30) Priorität: 22.06.2007 DE 102007029308
(43) Veröffentlichungstag der Anmeldung: 24.12.2008
(73) Patentinhaber: Bellheimer Metallwerk GmbH, 76756 Bellheim (DE)
(72) Erfinder: Röther, Michael, 76764 Rheinzabern (DE); Sproll, Bernhard, 76773 Kuhardt (DE)
(74) Vertreter: Grünecker, Kinkeldey, Stockmair & Schwanhäusser Anwaltssozietät

(56) Entgegenhaltungen:
- EP-A- 0 572 967
- EP-A- 1 431 214
- EP-A- 1 553 031
- DE-A1- 4 233 688
- DE-A1- 4 300 682
- FR-A- 2 818 624
- US-A- 4 818 171
- US-A1- 2003 065 421
- US-A1- 2005 002 772

## Beschreibung

Die Erfindung betrifft Verfahren zum automatischen Ein- und Auslagern von Lagergutträgern in einem Lagerregal, bei dem wenigstens zwei Lagergutträger in jeweils einer ersten und wenigstens einer anderen Lagerebene übereinander auf einem Transportwagen gelagert werden, der Transportwagen an das Lagerregal herangefahren und in einer Übergabeposition (U) am Lagerregal positioniert wird, und anschließend in der Übergabeposition (U) die Lagergutträger der ersten und dann der wenigstens einen anderen Lagerebene in das oder aus dem Lagerregal ein- oder ausgelagert werden, wobei ein relativer Höhenunterschied (ΔY) zwischen einer Arbeitsebene (E) einer Übergabevorrichtung und den jeweiligen Lagerebenen der Lagergutträger zum Ein- und Auslagern automatisch ausgeglichen wird. Ferner betrifft die Erfindung Transportwagen zum Transportieren von Lagergutträgern zu bzw. weg von einem Lagerregal, mit wenigstens zwei übereinander angeordneten Lagerebenen für die Lagergutträger, mit einem Positionierungsmittel, das auf eine dem Lagerregal zuordenbares Gegenpositionierungsmittel ausrichtbar ausgestaltet ist und durch das der Transportwagen in einer definierten Übergabeposition (U) am Lagerregal positionierbar ist, wobei in der Übergabeposition (U) die Lagergutträger nacheinander aus ihren Lagerebenen ein- oder ausgelagert werden können.

Lagerregale und Transportwagen sind als Teile von automatischen oder halbautomatischen Lagersystemen bekannt. Mit den Transportwagen werden meist auf Lagergutträgern bzw. Tablaren gelagerte Güter zu den Lagerregalen transportiert und von diesen abgeholt. In den Transportregalen sind die Lagergutträger auf verschiedenen übereinander angeordneten Lagerebenen eingelagert. Dabei können die Lagerebenen abhängig von der Höhe auf den Tablaren gelagerter Güter meist variabel genutzt werden, damit ein zur Verfügung stehender Lagerraum trotz unterschiedlicher Lagergüterhöhen effizient ausgenutzt und eine möglichst hohe Lagerdichte erreicht ist. Innerhalb der Lagerregale werden die Lagergutträger meist automatisch durch sogenannte Vertikalförderer in Seit- und Höhenrichtung bewegt. Man bezeichnet die mit Vertikalförderern ausgerüsteten Lagerregale dann auch als Lagerlifte.

Diese Lagerlifte besitzen oft eine Beschickungs- und Entnahmeöffnung, in die Lagergutträger gestellt oder eingeschoben werden können, um dann von dem Vertikalförderer abgeholt und an ihren vorbestimmten Lagerplatz gebracht zu werden. Umgekehrt werden angeforderte Lagergutträger von ihrem Lagerplatz aus mit dem Vertikalförderer zu der Beschickungs- und Entnahmeöffnung befördert.

In die Beschickungs- und Entnahmeöffnungen werden die Lagergutträger von Hand oder um so häufiger automatisch über einen Transportwagen ein- und ausgelagert. Dazu sind in den Beschickungs- und Entnahmeöffnungen Horizontalfördereinrichtungen angebracht, welche die Lagergutträger von dem Transportwagen herunterziehen.

Der Transportwagen wird entweder manuell oder in zunehmendem Maße automatisch an die Beschickungs- und Entnahmeöffnung herangefahren. Um ein Transportwagen nutzendes Lagersystem herum gibt es also ein gewisses Verkehrsaufkommen von lagerträgerbringenden und -holenden Transportwagen. Mit steigender Ein- und Auslageraktivität erhöht sich dieses Verkehrsaufkommen, wodurch es zunehmend zu logistischen Problemen kommen kann.

Sowohl bei manuell als auch bei maschinell bzw. automatisch geführten Transportwagen kann es beispielsweise zu einem logistischen Problem werden, wenn diese sich um eine Beschickungs- und Entnahmeöffnung eines Lagerliftes aufreihen bzw. ansammeln, weil die einzelnen Transportwagen nicht schnell genug an die Beschickungs- und Entnahmeöffnung herangeführt und be- und/oder entladen werden können. Ein weiteres logistisches Problem ergibt sich aus der Vielzahl von Transportwagen, die um einen Lagerlift, der meist in einer Fertigungshalle oder an einer Fertigungsstraße installiert ist. Die Vielzahl der Transportwagen kann die Wege in der Fertigungshalle bzw. um den Lagerlift angelegte Verkehrsanbindungen blockieren und andere Nutzer dieser Wege behindern.

Ein weiteres logistisches Problem besteht darin, dass insbesondere für automatisch gefahren und gesteuerte Transportwagen in manchen Fällen feste Wege vorgeschrieben sind, die teilweise sogar als Einbahnstraßen festgelegt sind. Auf diesen Wegen müssen die Transportwagen dann längere Strecken in Kauf nehmen, sozusagen eine gesamte Runde absolvieren, in der sie mit einer Lagergutanforderung oder -einlageranweisung zu einem Lagerlift geschickt und von diesem wieder abbeordert werden. Bei diesen längeren Strecken ist insbesondere die Ladekapazität der Transportwagen ein limitierender Faktor. Durch die begrenzte Lagerkapazität der Transportwagen steigt wiederum deren benötigte Zahl und damit auch wiederum das Verkehrsaufkommen und der logistische Aufwand für ihren Betrieb.

Die Druckschrift offenbart ein Verfahren zum automatischen Ein- und Auslagern von Lagergutträgern gemäß dem Oberbegriff des Anspruchs 1 sowie einen Transportwagen gemäß dem obergriff des Auspruchs 1B. Die Druckschrift DE 43 00 682 A1 beschreibt einen Transportwagen mit wenigstens zwei Aufnahmeebenen für Werkstückmagazine, der von einer Person manuell zu einer Bearbeitungsmaschine fahrbar ist. Die Aufnahmeebenen sind mit einer mechanischen Hebelvorrichtung versehen, durch die sie auf die Höhe einer feststehenden Übergabeebene an der Bearbeitungsmaschine bewegt werden können.

Der Erfindung liegt folglich die Aufgabe zugrunde, ein eingangs genanntes Verfahren zum automatischen Ein- und Auslagern von Lagergutträgern in einem Lagerregal mit Hilfe von Transportwagen zu verbessem.

In einem erfindungsgemäßen Verfahren wird diese Aufgabe dadurch gelöst, dass wenigstens eine Lagerebene des Transportwagens zum Be- und Entladen einer darunterliegenden Lagerebenen von der darunterliegenden Lagerebenen weggeklappt wird. Somit können etwaige Lagergüter auch manuell oder maschinell in durch darüberliegende Lagerebenen verdeckte Lagerebenen eingelagert, wenn nicht sogar geschüttet werden. Dies ist insbesondere bei einem manuellen Be- und Entladen von Vorteil, wenn in den Transportwagen eingeschobene Lagergutträger nicht von Hand aus dem Transportwagen herausgezogen oder in ihn eingeschoben werden können.

Diese einfache Lösung hat den Vorteil, dass auf dem Transportwagen mehrere Lagerebenen mit einem Höhenunterschied (ΔY) zur Verfügung stehen, wodurch die Lagerkapazität des Transportwagens erhöht ist. Wenn solche erfindungsgemäßen Transportwagen in einem Lagersystem eingesetzt werden, kann deren Anzahl aufgrund ihrer erhöhten Lagerkapazität reduziert werden. Gleichzeitig verkürzen sich die Ein- und Auslagerzeiten an den Beschickungs- und Entnahmeöffnungen der Lagerregale, weil aus einem in der Übergabeposition (U) positionierten Transportwagen gleich mehrere Lagergutträger ein- und ausgelagert werden können.

Diese erfindungsgemäße Lösung kann mit den folgenden weiteren jeweils für sich vorteilhaften Verfahrensschritten beliebig kombiniert und weiter verbessert werden.

So kann gemäß einer ersten möglichen vorteilhaften Verbesserung eines erfindungsgemäßen Verfahrens vorgesehen werden, dass die Übergabeposition (U) mit Hilfe eines Positionierungsmittels an dem Transportwagen und/oder dem Regallager bestätigt wird. Derartige Positionierungsmittel können beispielsweise als Näherungsschalter oder Magnete im Boden vor oder direkt an der Beschickungs- und Entnahmeöffnung eines Lagerregals oder dem Transportwagen selber angebracht sein. Dort helfen sie, den Transportwagen mit einer hohen Genauigkeit in die Übergabeposition (U) zu führen und in der Übergabeposition (U) ein bestätigendes Signal zu erzeugen. Ab diesem elektrischen Signal können dann weitere Verfahrensschritte freigegeben oder abgewartet werden, was hilft, ein erfindungsgemäßes Verfahren zu strukturieren und möglichst sicher zu gestalten.

Gemäß eines weiteren möglichen vorteilhaften Verfahrensschrittes kann vorgesehen werden, dass eine Entladebereitschaft des Transportwagens mit Hilfe eines Positionierungsmittels an dem Transportwagen und/oder dem Regallager bestätigt wird. Dieser Verfahrensschritt kann sich beispielsweise dem Bestätigen der Übergabeposition (U) anschließen. Damit ist gewährleistet, dass sowohl das Lagerregal bzw. die Übergabevorrichtung als auch der Transportwagen für den Ein- und Auslagerprozess bereit sind. Dies ist insbesondere von Vorteil, wenn zur Durchführung des Ein- und Auslagerprozesses etwaige Ausschubsicherungen bzw. Fanghaken gelöst werden müssen, welche die Lagergutträger auf ihren Lagerebenen in dem Transportwagen oder auf der Übergabevorrichtung sichern, damit die Lagergutträger nicht unsachgemäß oder unvollständig von dem Transportwagen oder der Übergabevorrichtung entfernt oder in diese eingeschoben werden.

Es können sowohl die Bestätigung der Übergabeposition (U) an dem Lagerregal durch den Transportwagen oder umgekehrt als auch die Bestätigung der Entladebereitschaft an dem Transportwagen bzw. der Übergabevorrichtung oder umgekehrt als Freigabe für den Ein-und Auslagerprozess genutzt werden.

Die Bestätigungen der Übergabepositionen und der Entladebereitschaft können auch zur Signalisierung des Abschlusses eines Be- und Entladevorgangs verwendet werden, wenn an dem Lagerregal und dem Transportwagen eingesetzte Positionierungsmittel ein Herausfahren des Transportwagens und/oder einer Übergabevorrichtung aus der Übergabeposition (U) melden.

Die oben genannten Bestätigungsprozesse sind insbesondere dann vorteilhaft nutzbar, wenn gemäß eines weiteren möglichen Verfahrensschrittes vorgesehen ist, dass der Transportwagen automatisch in der Übergabeposition (U) positioniert wird. Die automatische Positionierung kann durch einen selbst angetriebenen Transportwagen selber oder durch ein an den Transportwagen angekoppeltes Hilfsmittel geschehen. Dieses Hilfsmittel kann beispielsweise ein Führungsmodul an der Übergabevorrichtung oder dem Lagerregal sein, das den Transportwagen ab einer bestimmten Annäherungsposition an die Beschickungs- und Entnahmeöffnung übernimmt und exakt in die Übergabeposition (U) führt.

Der Be- und Entladevorgang des Transportwagens kann insbesondere dann schnell vonstatten gehen, wenn gemäß einer weiteren möglichen vorteilhaften Verbesserung eines erfindungsgemäßen Verfahrens vorgesehen ist, dass die Lagergutträger mit Hilfe einer Horizontalfördereinrichtung in die Lagerebenen des Transportwagens ein- und/oder ausgeschoben werden. Das Ein- und Ausschieben stellt eine einfache und elegante Möglichkeit dar, die Lagergutträger zu bewegen. Zum Ein- und/oder Ausschieben kann die Horizontalfördereinrichtung geeignete Griffmittel besitzen, die an dem Lagergutträger angreifen können, um ihn aus seiner jeweiligen Lagerebene zu ziehen oder auf eine für ihn vorbestimmte Ebene zu schieben.

Damit ein Lagergutträger nicht ungewollt von seiner Lagerebene herunterrutschen kann, ist gemäß eines weiteren möglichen vorteilhaften Verfahrensschrittes vorsehbar, dass vor dem Ein- und/oder Ausschieben der Lagergutträger eine Ausschubsicherung gelöst wird. Wie schon erwähnt, kann diese Ausschubsicherung bei einem Bestätigungsvorgang für die Freigabe der Übergabeposition gelöst werden. Eine derartige Ausschubsicherung kann rein mechanisch oder auch elektrisch gesteuert sein und sollte im Wesentlich quer zu einer Einschubrichtung (Z) der Lagergutträger wirken, indem sie den Lagergutträger hintergreift, verrastet oder in einer definierten Lagerstellung verriegelt.

Gemäß eines weiteren möglichen vorteilhaften Verfahrensschrittes kann vorgesehen werden, dass spätestens in der Übergabeposition (U) ein Datenträger an den Transportwagen und/oder den Lagergutträgern ein- und/oder ausgelesen wird. Der Datenträger kann eine Reihe von Informationen über die Art und den Bestimmungsort der Lagergutträger und der auf ihnen gelagerten Güter enthalten. Auch kann der Datenträger Informationen darüber enthalten, in welchen Lagerpositionen Lagergutträger auf dem Transportwagen eingelagert sind. Zum Ein- und Auslesen des Datenträgers kann an dem Lagerregal bzw. der Übergabevorrichtung eine Datenübertragungseinrichtung, wie zum Beispiel ein Funk- oder Infrarottransmitter angebracht sein, der beispielsweise auch in einer gewissen Entfernung des Transportwagens schon Informationen über die ein- und auszulagernden Lagergutträger erfassen kann, falls dies gewünscht ist.

Ferner kann der Datenträger selber auch als Positionierungsmittel eingesetzt werden und ein Ein- und Ausladeprozess der Lagergutträger erst dann eingeleitet werden, wenn bestimmte auf dem Datenträger gespeicherte Daten übertragen wurden.

Gemäß einer weiteren möglichen vorteilhaften Verbesserung eines erfindungsgemäßen Verfahrens kann vorgesehen werden, dass bei der Annäherung des Transportwagens an das Lagerregal Lichtgitterelemente an dem Lagerregal eingeschaltet werden. Dieses Einschalten kann durch Näherungssensoren oder andere Lichtgitterelemente bzw. Lichtschranken oder Bewegungsmelder ausgelöst werden. Damit können das Lagerregal und die Übergabevorrichtung auch in eine Bereitschaft versetzt werden, was allerdings auch schon durch die Übertragung eines bestimmten Funksignals über eine Datenübertragungseinrichtung an dem Transportwagen oder dem Lagerregal geschehen sein kann.

Das Lichtgitter an dem Lagerregal kann dabei behilflich sein, in dem Transportwagen eingelagerte Lagergutträger zu erfassen. Neben deren Zahl und Lagerposition kann auch die Höhe der auf den Lagergutträgem gelagerten Güter mit Hilfe des Lichtgitters ermittelt werden.

Darüber hinaus kann das Lichtgitter eine Sicherheitsfunktion erfüllen, indem es etwaige Gegenstände oder Personen in einem gewissen Sicherheitsbereich um die Be- und Entladeöffnung erfasst und daraufhin in den Verfahrensablauf eingreift. So kann die Geschwindigkeit eines Transportwagens verlangsamt oder der Transportwagen, ein Horizontalförderer oder etwaige andere bewegliche Einheiten des Lagerregals oder des Transportwagens abgeschaltet oder durch Türen, Klappen oder Sperren gesichert werden.

Gemäß einer weiteren möglichen vorteilhaften Verbesserung eines erfindungsgemäßen Verfahrens kann vorgesehen werden, dass die Übergabevorrichtung und/oder die Lagerebenen des Transportwagens mit einem Hubmittel in der Höhenrichtung H verfahren werden, um die Lagergutträger aus ihren jeweiligen Lagerebenen aus dem Transportwagen ein- oder auszulagern. So kann die Übergabevorrichtung auf einen Hubscherentisch oder einen Vertikalförderer montiert sein, der die jeweiligen Lagerebenen auf dem Transportwagen anfährt. Es ist auch denkbar, dass ein Hubmittel in dem Transportwagen selber installiert wird, um die Lagerebenen des Transportwagens auf eine bestimmte Arbeitshöhe einer Übergabevorrichtung zu fahren.

Insbesondere wenn eine Übergabevorrichtung auf einen Vertikalförderer montiert ist, ist es von Vorteil, wenn gemäß einer weiteren möglichen Verbesserung eines erfindungsgemäßen Verfahrens vorgesehen wird, dass der Transportwagen in eine Einfahrt in einem Lagerregal einfährt. Somit blockiert der Transportwagen nicht den Bereich vor dem Lagerregal während des Ein- und Auslagerns der Lagergutträger. In dem Regal kann der Transportwagen sicher und ohne äußere Störeinflüsse in seiner Übergabeposition positioniert werden. Dies vermindert auch die von den Elementen eines Lagerliftes, einer Übergabevorrichtung oder eines Transportwagens ausgehenden Gefahren für Personen und Gegenstände, die sich weniger leicht in einen Gefahrenbereich zwischen dem Transportwagen und der Übergabevorrichtung bewegen können, wenn der gesamte Transportwagen in den Lagerlift einfährt.

Dabei ist möglich, dass eine Einfahrt zu einem Lagerlift durch eine geeignete Sperre, wie zum Beispiel ein Rolltor, verschlossen wird, damit nicht ordnungsgemäße Eingriffe in den Lagerlift bzw. einen Ein- und Auslagervorgang unterbunden werden. So wäre es schließlich denkbar, dass ein Transportwagen während des Ein- und Auslagervorgangs von einer Person oder einer Maschine aus seiner Übergabeposition gestoßen wird, was allerdings unwahrscheinlicher erscheint, wenn sich der Transportwagen innerhalb eines Lagerliftes befindet.

Das Einfahren eines Transportwagens in ein Lagerregal oder das Heranführen des Transportwagens an eine Übergabevorrichtung kann gemäß einer weiteren möglichen Verbesserung eines erfindungsgemäßen Verfahrens erleichtert werden, wenn vorgesehen wird, dass das Einfahren des Transportwagens in die Einfahrt durch wenigstens eine Einlaufhilfe an der Einfahrt geführt wird. Diese Einlaufhilfe kann beispielsweise trichterförmig auf die Einfahrt oder zumindest die Übergabevorrichtung zulaufen und den Transportwagen in die Einfahrt bzw. zur Übergabevorrichtung leiten.

Diese Maßnahme kann auch in Verbindung mit einer weiteren möglichen Verbesserung eines erfindungsgemäßen Verfahrens von Vorteil sein, gemäß der bei einer Annäherung des Transportwagens an die Übergabevorrichtung die Genauigkeit der Ortsbestimmung des Transportwagens erhöht wird. Insbesondere bei automatisch geführten Transportwagen ist der Ort des Transportwagens während seiner Fahrt durch seinen Einsatzort möglichst genau zu bestimmen. Allerdings sind der Ortsbestimmung gewisse wirtschaftliche und technische Grenzen gesetzt. Daher ist es von Vorteil, wenn die Ortsbestimmung den jeweiligen Genauigkeitsanforderungen gemäß angepasst wird. Da insbesondere beim Ein- und Auslagern der Lagergutträger eine sehr hohe Genauigkeit erforderlich ist, sollte die Genauigkeit der Ortsbestimmung spätestens dann erhöht werden, wenn der Transportwagen in seine Übergabeposition an der Übergabevorrichtung geführt wird.

Diese Vorgehensweise ist insbesondere dann vorteilhaft, wenn gemäß einer weiteren möglichen Verbesserung eines erfindungsgemäßen Verfahrens vorgesehen ist, dass der Transportwagen von einer externen Antriebseinheit an die Übergabevorrichtung (U) herangefahren wird. Diese externe Antriebseinheit kann dann etwaige Hilfsmittel, wie Positionierungseinrichtungen oder sonstige optische oder magnetische Kennungen auf dem Weg zum Lagerregal in bzw. an der Beschickungs- und Entnahmeöffnung oder Einfahrt in das Lagerregal nutzen, um den Transportwagen exakt in die Übergabeposition (U) zu fahren.

Der Einsatz einer externen Antriebseinheit kann auch die Wirtschaftlichkeit der Verwendung von Transportwagen erhöhen, weil nicht jeder Transportwagen mit geeigneten Ortsbestimmungs-, Referenzierungs- sowie Antriebssystemen und Energieversorgungseinrichtungen versehen sein muss.

Dementsprechend lässt sich ein erfindungsgemäßes Lagersystem mit einer Vielzahl von Transportwagen und einer eher geringeren Zahl von externen Antriebseinheiten betreiben, wenn gemäß einer weiteren möglichen vorteilhaften Verbesserung eines erfindungsgemäßen Verfahrens vorgesehen wird, dass die externe Antriebseinheit vor dem Bewegen des Transportwagens an den Transportwagen angekoppelt wird. Die externe Antriebseinheit kann dann je nach Anforderung einen Transportwagen zu einem Lagerregal befördern oder von einem Lagerregal abholen. Dabei können auch gewisse Prioritäten implementiert werden, gemäß derer, die externe Antriebseinheit ein Abarbeiten gewisser Transportwagen anderen Transportwagen vorzieht.

Es kann gemäß eines weiteren möglichen Verfahrensverbesserungsschrittes auch vorgesehen werden, dass die externe Antriebseinheit spätestens in der Übergabeposition des Transportwagens abgekoppelt wird. Dabei kann die externe Antriebseinheit die Kontrolle über den Transportwagen dem Lagerregal bzw. einer Übergabevorrichtung übertragen und sich anderen Aufgaben widmen. Somit kann die externe Antriebseinheit auch länger andauernde Ein- und Auslagerprozesse überbrücken.

Diese Vorgehensweise kann auch dann von Vorteil sein, wenn eine Ortsbestimmung bzw. - führung des Transportwagens in der Nähe einer Übergabevorrichtung oder in einer Einfahrt in ein Lagerregal ohnehin genauer durch die dort installierten Führungs- und Positionierungsmittel gewährleistet sind.

Das Be- und Entladen eines Transportwagens kann gemäß einer weiteren möglichen Verbesserung eines erfindungsgemäßen Verfahrens erleichtert werden, indem wenigstens eine Lagerebene des Transportwagens zum Be- und Entladen einer darunterliegenden Lagerebenen von der darunterliegenden Lagerebenen weggeklappt wird. Somit können etwaige Lagergüter auch manuell oder maschinell in durch darüberliegende Lagerebenen verdeckte Lagerebenen eingelagert, wenn nicht sogar geschüttet werden. Dies ist insbesondere bei einem manuellen Be- und Entladen von Vorteil, wenn in den Transportwagen eingeschobene Lagergutträger nicht von Hand aus dem Transportwagen herausgezogen oder in ihn eingeschoben werden können.

Die obige Aufgabe wird hinsichtlich eines erfindungsgemäßen Transportwagens dadurch gelöst, dass dieser wenigstens eine Lagerebene besitzt, die über wenigstens ein Scharnier klappbar an dem Transportwagen befestigt ist. Somit können unterhalb dieser Transportebene liegende Ebenen erreicht werden, ohne die auf ihnen eingelagerten Lagergutträger aus dem Transportwagen herausziehen bzw. auslagern zu müssen. Der erfindungsgemäße Transportwagen besitzt demgemäß also eine erhöhte Lagerkapazität, weil er über mehrere Lagerebenen verfügt und kann zusätzlich genau positioniert werden, was ein schnelles Ein- und Auslagem von Lagergutträgem auf dem Transportwagen ermöglicht.

Ein erfindungsgemäßer Transportwagen kann gemäß einer ersten möglichen Ausgestaltungsform dadurch verbessert werden, dass der Transportwagen mit einem Datenträger versehen ist, auf dem Informationen über wenigstens einen auf dem Transportwagen gelagerten und/oder von dem Transportwagen angeforderten Lagergutträger ein- und/oder auslesbar sind. Dieser Datenträger kann genaue Informationen über die auf dem Transportwagen gelagerten Güter und Lagergutträger beinhalten. Damit lassen sich die Lagergutträger und die auf ihnen gelagerten Güter schnell den Lagerebenen in dem Lagerregal und auf dem Transportwagen zuordnen, was ein Versenden und Anfordern der Lagergutträger in einem erfindungsgemäßen Lagersystem erleichtert.

Gemäß einer weiteren möglichen vorteilhaften Ausgestaltungsform eines erfindungsgemäßen Transportwagens kann wenigstens eine Lagerebene durch wenigstens ein Stützprofil gebildet sein. Solch ein Stützprofil lässt sich insbesondere dann leicht bilden, wenn das wenigstens eine Stützprofil an einem Wandelement ausgeformt ist. Somit kann zwischen zwei mit Stützprofilen versehenen Wandelementen ein Aufnahmeraum des Transportwagens gebildet sein, in welchem die Lagergutträger variabel gemäß einer Höhe der jeweils auf ihnen gelagerten Güter eingelagert werden und auf dem Transportwagen ist eine Lagerverdichtung durchführbar.

Dabei kann es gemäß einer weiteren möglichen Ausgestaltungsform eines erfindungsgemäßen Transportwagens von Vorteil sein, wenn an wenigstens einer Lagerebene mindestens ein Lichtgitterelement angeordnet ist. Dieses Lichtgitterelement kann dazu benutzt werden, um sowohl die auf den verschiedenen Ebenen des Transportwagens eingelagerten Lagergutträger als auch die Höhen, der auf den Lagergutträgern gelagerten Güter zu erfassen. Dabei können mehrere dieser Lichtgitterelemente bzw. Lichtschranken oder auch andere geeignete Näherungsschalter bzw. elektronische Erfassungselemente dafür eingesetzt werden, ein Erfassungssystem auf dem Transportwagen für die auf den verschiedenen Lagerebenen einlagerbaren Lagergutträger und die auf den Lagergutträgern gelagerten Güter zu bilden. Somit kann der Transportwagen selber Informationen über die auf ihm eingelagerten Lagergutträger, wie z.B. die Höhe der Lagergüter, ermitteln und beispielsweise über eine Datenübertragungseinrichtung an eine Übergabevorrichtung bzw. ein Lagerregal weiterleiten.

Gemäß einer weiteren möglichen vorteilhaften Ausgestaltungsform eines erfindungsgemäßen Transportwagens kann dieser ein Hubmittel besitzen, mit dem wenigstens eine Lagerebene des Transportwagens in einer Höhenrichtung (Y) verfahrbar ist. Somit kann ein Höhenunterschied ΔY zwischen den Lagerebenen des Transportwagens zum relativen Ausgleich mit der Arbeitsebene E der Übergabevorrichtung auch mit dem in dem Transportwagen angebrachten Hubmittel überwunden werden.

Im Folgenden wird die Erfindung anhand vorteilhafter Ausführungsformen mit Bezug auf die Zeichnungen beispielhaft näher erläutert. Die beschriebenen Ausführungsformen stellen dabei lediglich mögliche Ausgestaltungen dar, bei denen jedoch die einzelnen Merkmale, wie oben beschrieben ist, unabhängig voneinander realisiert und weggelassen werden können.

Es zeigen:
- Fig. 1: ein Verfahrensschema für einen erfindungsgemäßen Ein- und Auslagerungs- vorgang;
- Fig. 2: eine schematische Perspektivansicht eines Lagergutträgers;
- Fig. 3: eine schematische Perspektivansicht der Unterseite des Lagergutträgers aus Fig. 2;
- Fig. 4: eine schematische Perspektivansicht eines Transport- wagens;
- Fig. 5: eine schematische Perspektivansicht eines erfindungsgemäßen Transport- wagens mit gekippter Lagerebene;
- Fig. 6: eine schematische Perspektivansicht eines Transport- wagens;
- Fig. 7: eine schematische Perspektivansicht eines erfindungsgemäßen Transportwagens mit Hubfunktion;
- Fig. 8: eine schematische Perspektivansicht eines erfindungsgemäßen Transportwagens mit Hubfunktion;
- Fig. 9: eine schematische Perspektivansicht einer Rasterwand mit einem Lichtgitter;
- Fig. 10: eine vergrößerte Teilansicht der Einzelheit IV aus der schematischen Perspektivansicht der Rasterwand mit Lichtgitter aus Fig. 9;
- Fig. 11: eine vergrößerte Seitenansicht des Lichtgitters aus Fig. 9 entlang der Schnittlinie V-V;
- Fig. 12: eine schematische Perspektivansicht eines Lagerregals;
- Fig. 13: eine schematische Perspektivansicht des Lagerregals in Fig. 12 mit teilweise abgenommenen Abdeckungen;
- Fig. 14: eine schematische Perspektivansicht einer Transfereinrichtung;
- Fig. 15: einen Ausschnitt aus der schematischen Perspektivansicht der Transfereinheit in Fig. 14;
- Fig. 16: eine schematische Perspektivansicht eines Transportwagens;
- Fig. 17: eine schematische Perspektivansicht eines Lagerregals mit einfahrendem Transportwagen.

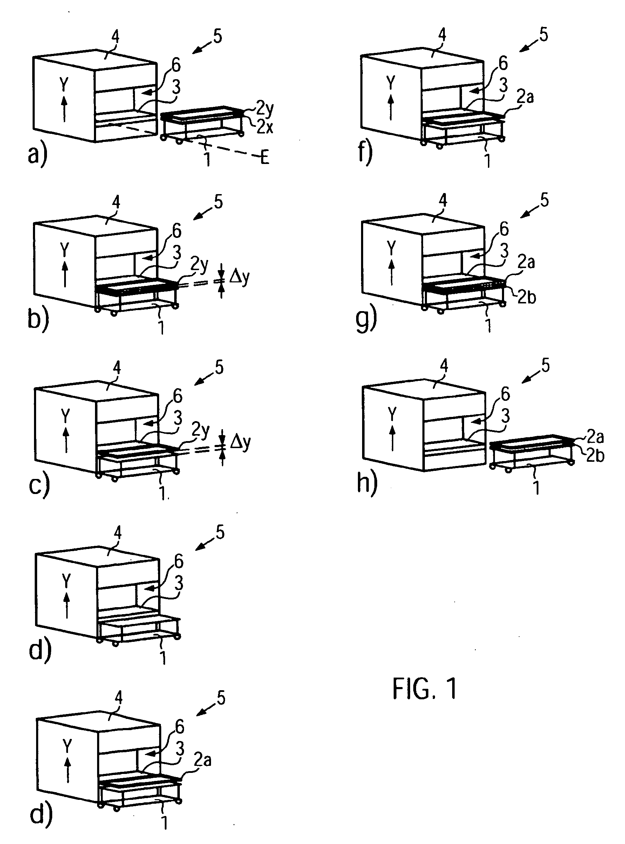

Zunächst wird eine Ausgestaltungsform eines erfindungsgemäßen Verfahrens zum Ein- und Auslagern von auf einem Transportwagen 1 transportierten Lagergutträgem 2 mit Hilfe einer Transfer- bzw. Übergabevorrichtung 3 in ein Lagerregal 4 anhand der Fig. 1 beschrieben. Fig. 1 zeigt mögliche Verfahrensschritte a) bis h) eines erfindungsgemäßen Verfahrens zum Ein- und Auslagern von Lagergutträgem 2 eines erfindungsgemäßen Lagersystems 5, wobei die Lagergutträger 2 auf einem Transportwagen 1 zu einem Lagerregal 4 transportiert und von dem Lagerregal 4 abgeholt werden.

In einem Verfahrensschritt a) kommt ein mit zwei Lagergutträgern 2x, 2y beladener Transportwagen 1 zu einem Lagerregal 4 gefahren. Der Lagergutträger 2y ist auf dem Transportwagen über dem Lagergutträger 2x gelagert. Die Lagergutträger 2x, 2y sollen über die Arbeitsebene (E) Transfervorrichtung 3 in einer Beschickungs- und Entnahmeöffnung 6 des Lagerregals 4 in letzteres eingelagert werden.

In einem möglichen Verfahrensschritt b) ist der Transportwagen 1 vor die Beschickungs-und Entnahmeöffnung 6 gefahren. Die Transfervorrichtung 3 befindet sich in einer Höhenrichtung Y aus ihrer Arbeitsebene (E) auf der Höhe des Lagergutträgers 2x der sich um eine Höhendifferenz ΔY unterhalb des Lagergutträgers 2y befindet. Die Transportvorrichtung ist bereit, den Lagergutträger 2x aus dem Transportwagen 1 zu ziehen.

In einem möglichen Verfahrensschritt c) ist der Lagergutträger 2x aus dem Transportwagen 1 gezogen und bereits in das Lagerregal 4 eingelagert. Die Transfervorrichtung 3 ist auf die Höhe des zweiten Lagergutträgers 2y gefahren und bereit, diesen in das Lagerregal 4 zu überführen.

In einem möglichen Verfahrensschritt d) ist auch der zweite Lagergutträger 2y von dem Transportwagen 1 heruntergezogen und in das Lagerregal 4 überführt. Der Transportwagen 1 ist bereit, wieder mit Lagergutträgem 2 bestückt zu werden.

In einem nächsten möglichen Verfahrensschritt e) ist ein Lagergutträger 2a von der Transfervorrichtung 3 aus der Beschickungs- und Entnahmeöffnung 6 des Lagerregals 4 auf den Transportwagen 1 geschoben.

Dieser vom Transportwagen 1 angeforderte Lagergutträger 2a kann sowohl leer als auch mit auszulagernden Lagergütern beladen sein.

In einem möglichen Verfahrensschritt f) ist die Transfervorrichtung 3 wieder nach unten gefahren und bereit, einen vom Transportwagen 1 angeforderten Lagergutträger 2 unter den Lagergutträger 2a im Transportwagen 1 einzulagern.

In einem weiteren möglichen Verfahrensschritt g) ist ein zweiter Lagergutträger 2b unterhalb des ersten Lagergutträgers 2a in den Transportwagen eingelagert.

In einem letzten hier gezeigten möglichen Verfahrensschritt h) fährt der Transportwagen 1 mit zwei von ihm angeforderten Lagergutträgern 2a, 2b von dem Lagerregal 4 weg.

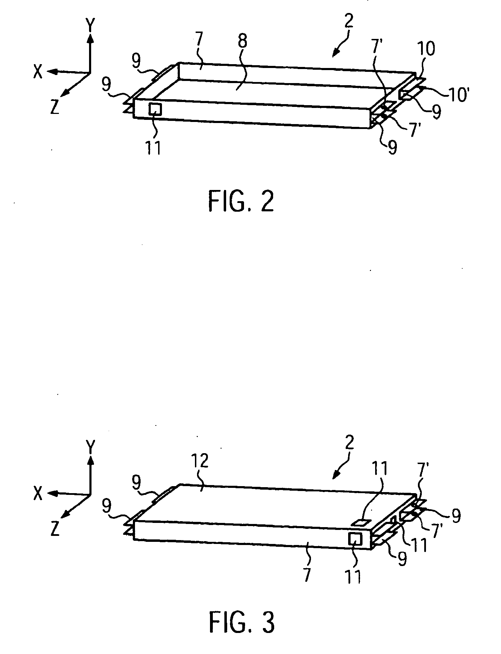

In Fig. 2 ist ein Lagergutträger 2 in einer schematischen Perspektivansicht gezeigt. Der Lagergutträger 2 besitzt eine von einem Rand 7 umgebene Lagerfläche 8. Seitlich sind an dem Lagergutträger 2 im Wesentlichen in einer Einschubrichtung Z des Lagergutträgers 2 verlaufende Stützstege 9 an dem Rand 7 des Lagergutträgers 2 befestigt. Die Stützstege 9 besitzen zwei in der Höhenrichtung Y voneinander beabstandete sich in einer Seitrichtung X erstreckende Schenkel 10, 10'.

An die Schenkel 10, 10' sind Ausschubsicherungen 7' in Form von Bohrungen bzw. Vertiefungen 7' angebracht. Diese Ausschubsicherungen 7' können von einem geeigneten Verrastungsmittel (hier nicht gezeigt) an einem Transportwagen 1 hintergriffen werden, damit die Lagergutträger 2 nicht ungewollt verschoben werden kann.

Ferner ist an dem Rand 7 um die Lagerfläche 8 außen ein in Einschubrichtung Z weisender Datenträger 11 angebracht. Auf dem Datenträger 11 können Informationen über auf dem Lagergutträger 2 gelagerte Güter gespeichert werden. Diese Informationen können beispielsweise die Art der gelagerten Güter, deren Bestell-, Stück- bzw. Teilenummern oder auch etwaige Fristen, wie z. B. Liefertermine, Haltbarkeits- oder Verfallsdaten, beinhalten. Ferner können diese Informationen auch Aussagen über die Art und Eigenschaften der gelagerten Güter, wie z. B. deren Gewicht, Maße, wie insbesondere die Lagerhöhe, und etwaige Lagervorschriften, beinhalten.

Der Datenträger 11 kann ein Radiofrequenzidentifikationschip (RF-ID) 11 oder ein anderweitiger Datenträger 11, wie z. B. ein Infrarotchip, ein Blue-tooth Chip oder auch ein optisch auszulesender Datenträger, wie beispielsweise ein Infrarotchip oder ein einfacher Barcode, sein.

In Fig. 3 ist der in Fig. 2 gezeigte Lagergutträger 2 umgedreht gezeigt, so dass eine Unterseite 12 des Lagergutträgers 2 nach oben weist. Hier wird deutlich, dass ein Datenträger 11 auch auf der Unterseite 12 oder an einer in Seitrichtung X weisenden Außenwand 7 des Lagergutträgers 2 angebracht sein kann. An der Außenwand 7 des Lagergutträgers 2 kann der Datenträger beispielsweise auch zwischen zwei Stützstegen 9 angebracht sein. Sowohl an einer in Einschubrichtung Z oder Seitrichtung X an der Seitenwand bzw. dem Rand 7 des Lagergutträgers 2 als auch auf dessen Unterseite 12 angebrachte Datenträger 11 können auch eine Zusatzfunktion als Positionierungshilfe erfüllen.

Die Stützstege 9 in zweifacher Ausführung mit einer Unterteilung an der in Seitrichtung X weisenden Außenwand 7 des Lagergutträgers 2 anzubringen, ist nicht zwingend erforderlich, aber bietet die Möglichkeit, zwischen den Stegen 9 einen Datenträger 11 anzubringen oder schlicht und ergreifend Material für die Stützstege 9 einzusparen. Die Stützstege 9 können an den Lagergutträger mit Hilfe einer formschlüssigen Verbindung, wie z. B. Nieten oder Schrauben, angebracht werden, können aber auch einstückig aus dem Material des Lagergutträgers 2 ausgeformt sein.

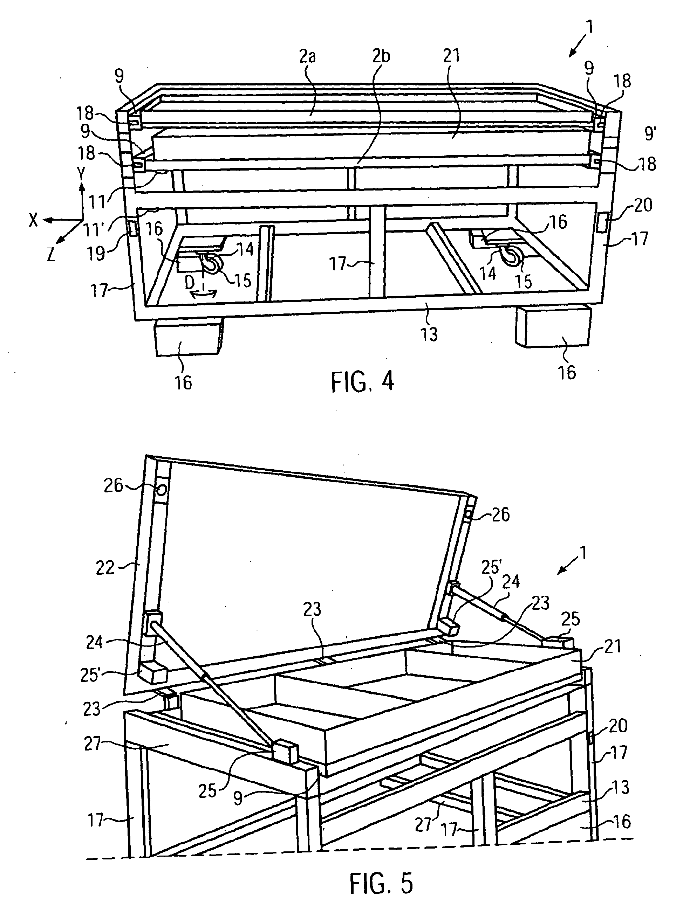

In Fig. 4 ist ein erfindungsgemäßer Transportwagen 1 in einer schematischen Perspektivansicht gezeigt. Der Transportwagen 1 besitzt ein Fahrgestell 13. Das Fahrgestell 13 sitzt um eine Drehachse D an einer Radaufhängung 14 drehbar gelagerter Rollen 15. Die Rollen bzw. Räder 15 sind so angebracht, dass sie sich gemäß einer in einer von der Seitrichtung X und Einschubrichtung Z aufgespannten Ebene möglichen Bewegungsrichtung B des Wagens 1 ausrichten. Ferner sind die Rollen von einer Schürze 16 umgeben. Die Schürze 16 schützt etwaige Personen oder Gegenstände davor, überrollt zu werden bzw. schützt die Rollen 15 davor, beim Gegenstoßen oder Überrollen von etwaigen Hindernissen beschädigt zu werden.

Auf dem Fahrgestell 13 sind Vertikalstützen 17 montiert. Die Vertikalstützen 17 können durch ein formschlüssiges Verbindungsverfahren, wie z. B. Nieten oder Schrauben, aber auch durch ein stoffschlüssiges Verbindungsverfahren, wie z. B. Löten oder Schweißen, auf dem Fahrgestell 13 befestigt sein. An den Vertikalstützen 17 sind im Wesentlichen parallel zur Einschubrichtung Z verlaufende Stützprofile 18 angebracht, die ebenso wie die Vertikalstützen form- und/oder stoffschlüssig mit den Vertikalstützen 17 bzw. dem Fahrgestell 13 verbunden sein können. Auf den Stützprofilen 18 liegen Lagergutträger 2a, 2b mit ihren Stützstegen 9 auf. Die Lagergutträger 9 sind in Einschubrichtung Z in den Transportwagen 1 ein- und auslagerbar.

Ferner ist in Fig. 4 zu erkennen, dass unter dem Lagergutträger 2b ein Datenträger 11 angebracht ist. Ebenso kann ein Datenträger 11' an dem Transportwagen 1 selber angebracht sein. Dieser Datenträger 11' kann Informationen über die in dem Transportwagen 1 eingelagerten oder von ihm angeforderten Lagergutträger 2 beinhalten.

Eine an einer Vertikalstütze 17 angebrachte Positionierungshilfe 19 vereinfacht ein exaktes Positionieren des Transportwagens 1. Die Positionierungshilfe 19 kann von einem entsprechenden Gegenstück erkannt werden und eine exakte Information über die Position des Transportwagens 1 liefern. Ein zusätzlicher Positionsgeber 20 kann eine Position des Transportwagens 1 ebenfalls bestätigen.

Ferner ist auf dem Lagergutträger 2b ein Kasten 21 angebracht.

In Fig. 5 ist der Transportwagen 1 aus Fig. 4 in einer schematischen Perspektivansicht gezeigt. Der Einfachheit halber wird hier nur auf die über die in Fig. 4 hinausgehenden Elemente und Funktionen des Transportwagens 1 eingegangen. Gleiche Teile sind mit gleichen Bezugszeichen versehen.

In Fig. 5 ist eine den in Fig. 4 gezeigten Lagergutträger 2a aufnehmende erste Lagerebene hochgeklappt. Die durch die Stützprofile 18 gebildete erste Lagerebene ist an einem Rahmenteil 22 montiert. Das Rahmenteil 22 ist über Scharniere 23 an dem Transportwagen 1 befestigt. Gasdruckfedern bzw. flexible Elemente 24 halten das Rahmenteil 22 in der gekippten Position. Die Gasdruckfedem 24 sind an Lagerelementen bzw. Stützen 25 montiert, die ebenso wie Stützen 25' an dem Rahmenteil 22 dazu dienen, das Rahmenteil 22 auf dem Transportwagen 1 abzustützen und die Last der auf dem Rahmenteil 22 bzw. von ihm getragenen Lagergutträger 2a gelagerten Gewichtskräfte der Lagergüter aufzunehmen.

Ferner sind an dem Rahmenteil 22 Sicherungsmittel 26 angebracht. Die Sicherungsmittel 26 liegen auf den Stützen 25 auf dem Transportwagen 1 auf, wenn das Rahmenteil 22 und damit die erste Lagerebene heruntergeklappt ist und auf dem Wagen 1 bzw. seinen Seitenprofilen 27 aufliegt. Das Sicherungsmittel 26 kann als einfaches mechanisches Verschlussmittel 26 ausgeführt sein, welches ein Verrasten, Verriegeln oder beispielsweise magnetisches Halten des Rahmenteils 22 auf dem Lagerelement 25 bewirkt.

Es ist aber auch durchaus möglich, das Sicherungsmittel 26 mit elektronischen Funktionen auszustatten, die beispielsweise eine Berührungssensorik umfassen können, welche durch einen einfachen elektrischen Schalter, wie einem Mikroschalter oder auch einem induktiven oder kapazitiven Näherungsschalter, darüber Auskunft gibt, ob das Rahmenteil 22 sicher in einer in Fig. 4 gezeigten Verschlussposition V auf dem Transportwagen in einer horizontalen Ebene aufliegt oder wie in einer in Fig. 5 gezeigten Öffnungsstellung O hochgeklappt ist.

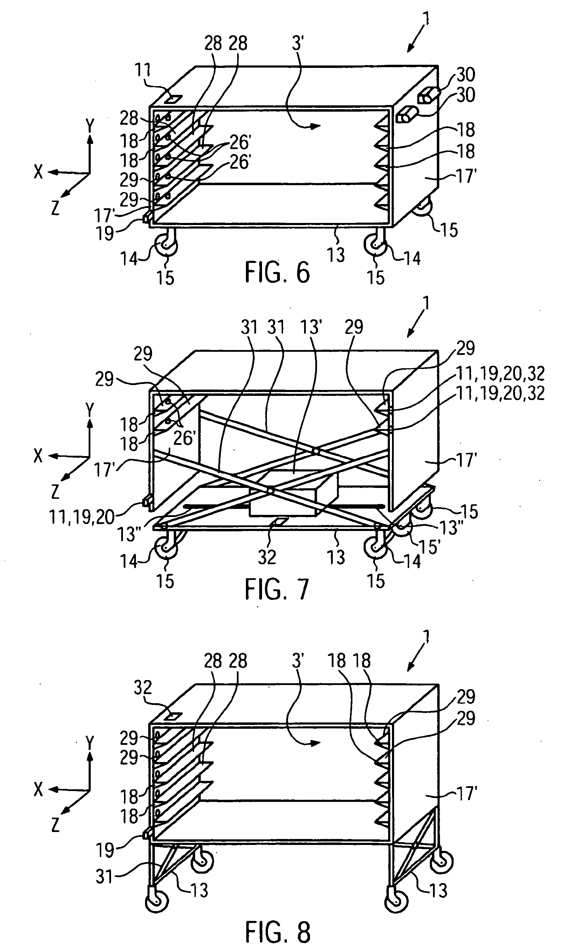

In Fig. 6 ist eine weitere mögliche Ausführungsform eines erfindungsgemäßen Transportwagens 1 in einer schematischen Perspektivansicht gezeigt. Der in Fig. 6 gezeigte Transportwagen 1 besitzt ebenfalls ein mit an drehbaren Radaufhängungen 14 gelagerten Rollen 15 versehenes Fahrgestell 13, auf das Vertikalstützen 17 montiert sind. Hier sind die Vertikalstützen 17 als Seitenwände 17' ausgeführt, an welche die Stützprofile 18 montiert sind.

Der in Fig. 6 gezeigte Transportwagen 1 besitzt mit den übereinander angeordneten Stützprofilen bzw. Stützprofilpaaren 18 eine Vielzahl von Lagerebenen 28, die einen Aufnahmeraum 3' bilden. Auf den Lagerebenen 28 können die Lagergutträger 2 sowohl mit ihren oberen Schenkeln 10 als auch mit ihren unteren Schenkeln 10' aufliegen, wodurch die effektiv nutzbare Zahl von Lagerebenen erhöht ist. Zwischen den Stützprofilen sind Lichtgitterelemente 29 angebracht. Die Lichtgitter- bzw. Lagerebenenerfassungselemente 29 ermöglichen sowohl ein Erfassen des auf ihrer jeweils zugeordneten Lagerebene 28 gelagerten Lagergutträgers als auch ein Ermitteln der Höhe auf dem Lagergutträger 2 gelagerter Lagergüter.

Auf den von den Stützprofilpaaren 18 gebildeten Lagerebenen 28 sind Fanghaken bzw. Rastmittel 26' angebracht. Die Rastmittel 26' können einen Lagergutträger 2 an seinen Stützstegen 9 ausgeformten Ausschubsicherungen 7' hintergreifen und ein ungewolltes Herausziehen des Lagergutträgers aus dem Transportwagen 1 verhindern. Die Rastmittel 26' können auch auf eine andere Art und Weise an dem Transportwagen 1 ausgeformt werden, um einen Lagergutträger mit einem entsprechend ausgeformten Gegenrastmittel bzw. einer Ausschubsicherung 7' zu halten, verriegeln oder sonst wie festzusetzen. Das Rastmittel 26' wird vorteilhafter Weise dann von der Ausschubsicherung 7' gelöst, wenn der Lagergutträger 2 aus dem Transportwagen 1 ausgelagert werden soll. Dieses Lösen kann sowohl elektronisch als auch mechanisch geschehen und beispielsweise durch ein Positionieren des Transportwagens 1 in der Übergabeposition U ausgelöst sein.

Es ist ferner möglich, dass eine Übergabevorrichtung 3 eine Ausschubsicherung 7' an einem Lagergutträger 2 auch dazu nutzt, um den Lagergutträger zu greifen bzw. zu befördern. Es können dabei aber auch die im Wesentlichen quer zu der Einschubrichtung Z der Lagergutträger 2 verlaufenden Ränder 7 der Lagergutträger benutzt werden, welche auch eine Sicherungsfunktion der Lagergutträger 2, ähnlich der Ausschubsicherung 7' erfüllen können.

An den Seitenwänden bzw. Vertikalstützen 17' des Transportwagens 1 sind Griffe bzw. Andock- oder Kupplungsmittel 30 angebracht. Die Griffe 30 ermöglichen, den Transportwagen 1 zu halten, um ihn mit Hilfe eines Triebfahrzeugs (nicht gezeigt) zu schieben oder zu ziehen. Das Triebfahrzeug kann an den Kupplungsmitteln ankoppeln. Die Kupplungsmittel 30 können den jeweiligen Anforderungen gemäß beliebig ausgeformt werden und sind auf keine spezielle Kontur oder Form festgelegt. Sie können darüber hinaus dazu dienen, ein ordnungsgemäßes Andocken eines Triebfahrzeuges zu bestätigen.

Es ist allerdings auch möglich, dass der Transportwagen 1 selbstfahrend ausgestaltet ist. Dementsprechend können an dem Transportwagen 1 auch etwaige Energiespeicher, Fahrmotoren, Richtungsgeber und eine Positionierungslogik sowie elektrische Fahrsteuerung angebracht sein.

Ferner verfügt der Transportwagen 1 über Positionierungshilfen 19 und Datenträger 11. Die Positionierungshilfe 19 erleichtert ein exaktes Positionieren des Transportwagens 1 beim Be- und Entladen von Lagergutträgem 2. Der Datenträger 11 kann Daten über die auf dem Transportwagen 1 gelagerten oder von ihm angeforderten Lagergutträger und die darauf befindlichen Lagergüter speichern.

In Fig. 7 ist eine weitere mögliche Ausgestaltungsform eines erfindungsgemäßen Transportwagens 1 in einer schematischen Perspektivansicht gezeigt. Der in Fig. 7 gezeigte Transportwagen 1 besitzt ebenfalls ein Fahrgestellt 13, an dem drehbar gelagerte Rollen 15 angebracht sind. Auf das Fahrgestell 13 sind in dieser möglichen Ausführungsform eines erfindungsgemäßen Transportwagens 1 Hubscheren 31 montiert. Diese Hubscheren bzw.

Hubmittel 31 dienen dazu, die Höhe der Lagerebenen 29 in Höhenrichtung Y an den Stützprofilen 18 zu variieren. Somit können auf den Stützprofilen 18 gelagerte Lagergutträger 2 auf eine erforderliche Be- oder Entladehöhe gebracht werden, um die mit einem Höhenunterschied ΔY gelagerten Lagergutträger mit Hilfe einer Transfervorrichtung 3 auf dem Transportwagen 1 ein- oder auszulagern.

Die Hubmittel 31 können auch eine beliebige andere Form als die hier gezeigten Hubscheren 31 aufweisen und müssen lediglich dazu in der Lage sein, die Lagerebene 28 auf dem Transportwagen 1 in Höhenrichtung Y zu variieren.

In der in Fig. 7 gezeigten möglichen Ausgestaltungsform besitzt der Transportwagen 1 eine Antriebseinheit 13'. Die Antriebseinheit 13' ist über elektrische und/oder mechanische Verbindungen 13" mit Steuermitteln 14' und Antriebsmitteln 15' an den Radaufhängungen 14 bzw. Rädern 15 verbunden. Die Steuermittel 14' lenken die Räder 15 an den Radaufhängungen 14. Die Antriebsmittel 15' treiben die Räder 15 an.

Sowohl in der Antriebseinheit 13' als auch in den Steuerungsmitteln 14' und Antriebsmitteln 15' können Energiespeicher, Motoren und Kraftübertragungs- sowie Regelungselemente beliebig miteinander kombiniert sein, um den Transportwagen 1 zu lenken und voranzutreiben. So kann in der Antriebseinheit 13' beispielsweise ein elektrischer Energiespeicher und eine elektrische Steuerung angeordnet sein. Diese sind über die Verbindungen 13" mit den Steuerungsmitteln 14' und den Antriebsmitteln 15' verbunden. Bei den Steuerungsmitteln 14' und den Antriebsmitteln 15' könnte es sich um Servo- bzw. Elektromotoren handeln, welche die Räder lenken und antreiben.

Ferner besitzt der Transportwagen 1 wiederum Datenträger 11, Positionierungshilfen 19 und Positionsgeber 20. Die Datenträger 11, Positionierungshilfen 19 und Positionsgeber 20. Diese können auch als ein integriertes Logistikmodul 32 ausgeführt sein, das eine Positionierung des Wagens 1 in Seitrichtung X oder Einschubrichtung Z vereinfacht oder eine Höhenverstellung der Lagerebene 28 sensorisch erfassbar macht.

In den Bereichen der Lagerebene 28 angebrachte Logistikmodule 32 können auch Informationen über die individuell auf den Lagerebenen 28 gelagerten Lagergutträger 2 beinhalten oder schlicht eine Höhenverstellung des Transportwagens 1 oder einer auf den Transportwagen 1 zugreifenden Transfereinrichtung 3 steuern bzw. steuern helfen.

In Fig. 8 sind weitere Möglichkeiten gezeigt, wie ein erfindungsgemäßer Transportwagen 1 ausgestaltet sein kann. Bei dem in Fig. 8 gezeigten Transportwagen 1 sind wiederum eine Vielzahl von Lagerebenen 28 durch die jeweiligen Stützprofile 18 gebildet. Zwischen den Stützprofilen 18 sind Lagerebenenerfassungselemente 28 angeordnet.

Ferner ist in Einschubrichtung Z eine Positionierungshilfe 19 an dem Transportwagen 1 angebracht. Zusätzlich verfügt der Transportwagen 1 über ein in Höhenrichtung Y weisendes Logistikmodul 32, das wiederum als Datenträger 11 oder Positionsgeber 20 bzw. Positionierungshilfe 19 ausgestaltet sein kann.

Bei dem in Fig. 8 gezeigten Transportwagen 1 sind Hubmittel 31 direkt in das Fahrgestell 13 integriert. Die Hubelemente 13 könnten auch in die Vertikalstützen bzw. Seitenwände 17' integriert sein und den Wagen auf die jeweils zum Ein- bzw. Ausladen erforderliche Höhe Y bringen. Es wäre durchaus denkbar, die Hubmittel 31 zum Beispiel in Vertikalstützen 17 zu integrieren, wie sie beispielsweise in Fig. 4 gezeigt sind. Die Hubmittel 31 könnten zum Beispiel als Pneumatikelemente ausgeführt sein.

Ferner ist es möglich, die Stützprofile 18 direkt in die Seitenwände 17' zu integrieren.

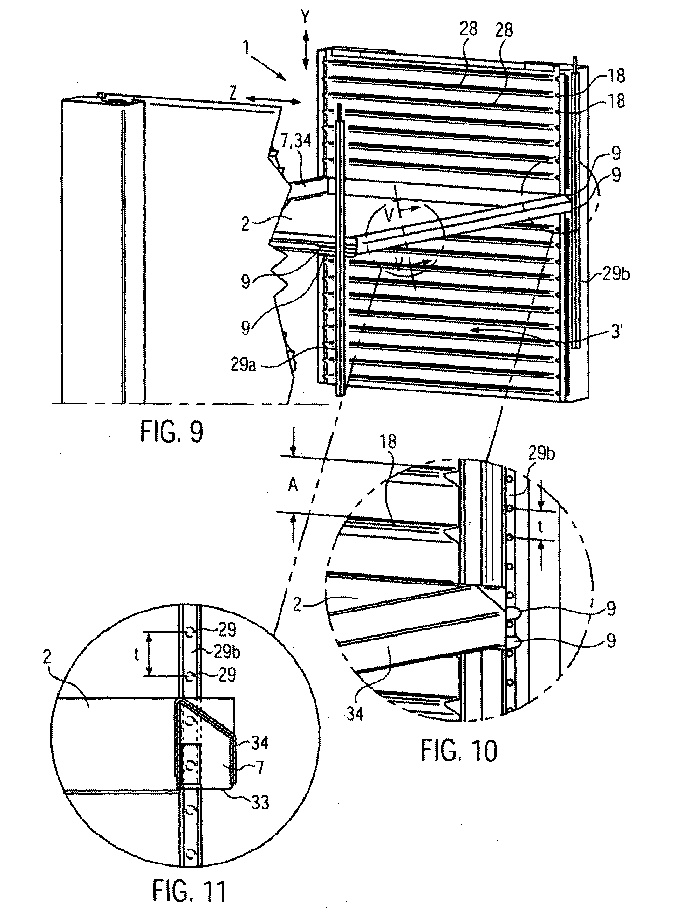

In Fig. 9 ist eine Möglichkeit gezeigt, wie die Seitenwände 17' eines erfindungsgemäßen Transportwagens 1 ausgestaltet sein könnten. So werden hier die einzelnen Lagerebenen bzw. Lagerplätze 28 durch paarweise übereinander und im Abstand angeordnete Stützprofile 18 gebildet, die zur Abstützung von Stützstegen 9 an den sich gegenüberliegenden Seiten der Lagergutträger 2 dienen.

Im Bereich einer Beschickungs- und Entnahmeöffnung bzw. des Aufnahmeraumes 3' des Transportwagens 1 ist ein Lichtgitter 29a, 29b angeordnet, das zur Messung der Höhe des sich auf den Lagergutträgem jeweils befindlichen Lagergutes genutzt werden kann und darüber hinaus noch eine zusätzliche Funktion erfüllt, indem es zur Identifizierung und Überprüfung der Position des jeweils in die Beschickungs- und Entnahmeöffnung 3 eingebrachten Lagergutträgers 2 dient, wobei sowohl dessen Vertikalposition Y als auch seine Horizontalposition Z erfasst wird.

Die weiteren Funktionsweisen des in Fig. 9 gezeigten Transportwagens 1 werden im Folgenden mit Bezug auf die Fig. 10 und Fig. 11 erklärt, in welchen eine Einzelheit IV der Teilansicht gemäß Fig. 9 in vergrößertem Maßstab und ein Schnitt längs der Linie V-V in Fig. 9 gezeigt ist.

In Fig. 10 und Fig. 11 wird deutlich, dass die Positionsbestimmung der Lagergutträger 5 unter Zuhilfenahme von ihnen zugeordneten Blenden 33 erfolgt. Bei der in den Zeichnungen dargestellten besonders vorteilhaften Lösung sind die Blenden 33 im Bereich von den als Griffleisten 34 ausgeformten sich gegenüberliegenden Enden bzw. Seitenwänden 7 der Lagergutträger 2 vorgesehen. Wie aus Fig. 11 ersichtlich, wird die jeweilige Blende 33 von einer mit einem Fenster 35 versehenen Seitenwand 7 der jeweiligen Griffleiste 34 gebildet. Die Abmessungen der Seitenwand 7 und des Fensters 35 sind dabei so auf eine Teilung t der Lagerebenenerfassungselemente bzw. Lichtschranken 29 des Lichtgitters 29a, 29b abgestimmt, dass jeweils ein Lichtstrahl die Blende 33 passiert und ein Lichtstrahl durch die Blende 33 unterbrochen, d. h. ausgeblendet wird. Während der durchgehende Lichtstrahl zur Positionsbestimmung des jeweiligen Lagerträgers 2 genutzt wird, dient der unterbrochene Lichtstrahl dazu, einem Steuersystem mitzuteilen, dass sich ein Lagergutträger 2 im Bereich der Beschickung- und Entnahmeöffnung 6, 6' befindet. Die Teilung t entspricht einem halben Abstand A zwischen den jeweils aufeinanderfolgenden Stützprofilen 18.

Somit bietet diese Ausführungsform eines erfindungsgemäßen Transportwagens 1 den Vorteil, dass sich besondere Sensoren 29 zur Überprüfung der ordnungsgemäßen Position des Lagergutträgers 2 in der Beschickungs- und Entnahmeöffnung 6, 6' eines Lagerregals 4 bzw. des Wagens 1 selber erübrigen. Eine derartige Überprüfung ist unabdingbar, um eine einwandfreie Überführung des Lagergutträgers 2 aus der Beschickungs- und Entnahmeöffnung 6, 6' auf eine Transfervorrichtung 3 oder aber auch auf einen Vertikalförderer 36 sicherzustellen. Die Funktionsweise eines solchen Vertikalförderers 36 wird weiter unter eingehend erläutert.

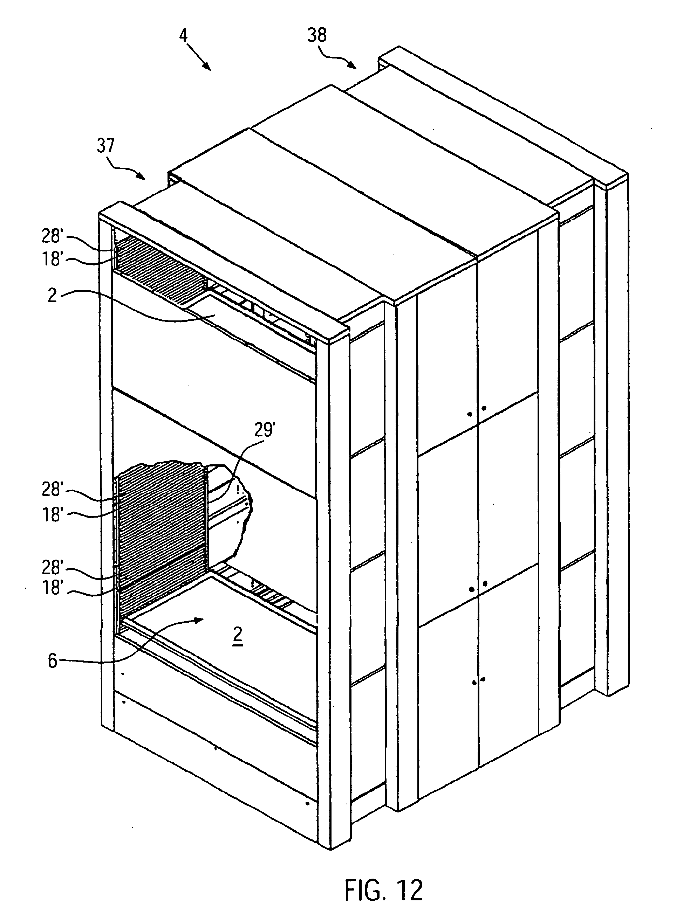

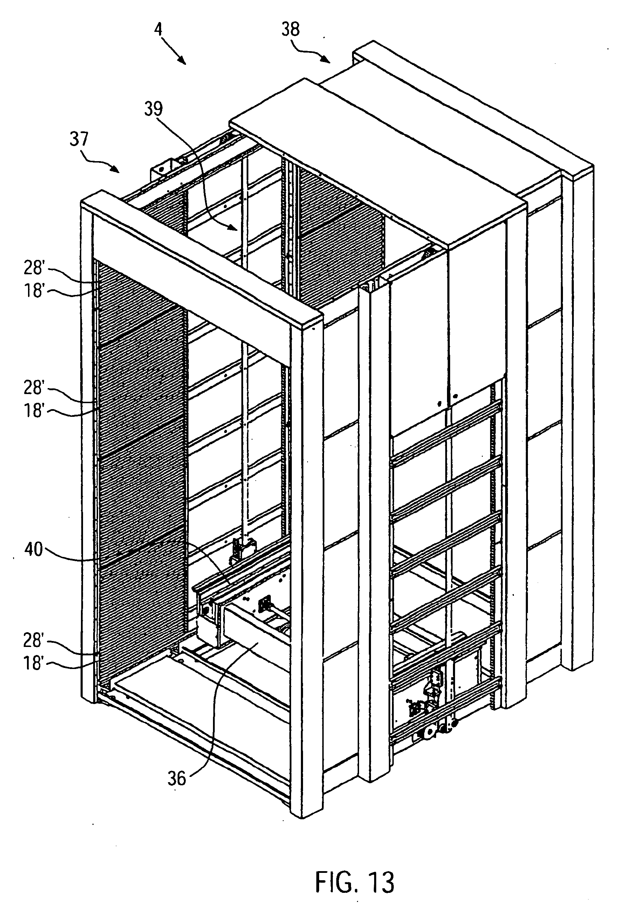

In Fig. 12 ist eine schematische Perspektivansicht eines Lagerregals bzw. Lagerliftes 4 einer schematischen Perspektivansicht gezeigt. Fig. 13 zeigt den Lagerlift 4 ohne Teile seiner Seitenverkleidung in einer weiteren schematischen Perspektivansicht.

Der in Fig. 12 und 13 gezeigte Lagerlift 4 verfügt über zwei Regalsäulen 37 und 38, die einen Schacht 39 begrenzen. In dem Schacht 39 ist ein mit einer Horizontalfördereinrichtung 40 ausgestatteter Vertikalförderer 36 auf- und abbewegbar, um Lagergutträger 2 an unterschiedliche Plätze 28' der Regalsäulen 37 bzw. 38 zu überführen. Die einzelnen Lagerplätze 28' werden dabei von paarweise übereinander und im Abstand voneinander angeordneten Stützprofilen 18' gebildet, die zur Abstützung der Stützstege 9 an den sich gegenüberliegenden Seiten der Lagergutträger 2 dienen.

Alternativ kann ein Lagerlift 4 auch als Umlaufregal ausgeführt sein, in welchem die Lagergutträger 2 horizontal und/oder vertikal umlaufend zu der Beschickungs- und Entnahmeöffnung 6 bewegt werden.

Bei dem in Fig. 12 und Fig. 13 gezeigten Lagerlift 4 sind auch in der Beschickungs- und Entnahmeöffnung 6 Stützprofile 18' vorgesehen, die ein Einführen von Lagergutträgern 2 in unterschiedlichen Höhenlagen Y der Beschickungs- und Entnahmeöffnung erlauben. Die jeweilige Bedienungsperson hat folglich die Möglichkeit, die Lagergutträger 2 an einer für sie jeweils ergonomisch optimalen Position in den Lagerlift 4 zu schieben.

Je nach Bedarf kann auch im hinteren Teil der Beschickungs- und Entnahmeöffnung 6 des Lagerliftes 4 ein Lichtgitter 29' angeordnet sein, das die Höhen auf den Lagergutträgern 2 gelagerter Lagergüter erfassen und die Position der Lagergutträger 2 bestimmen kann.

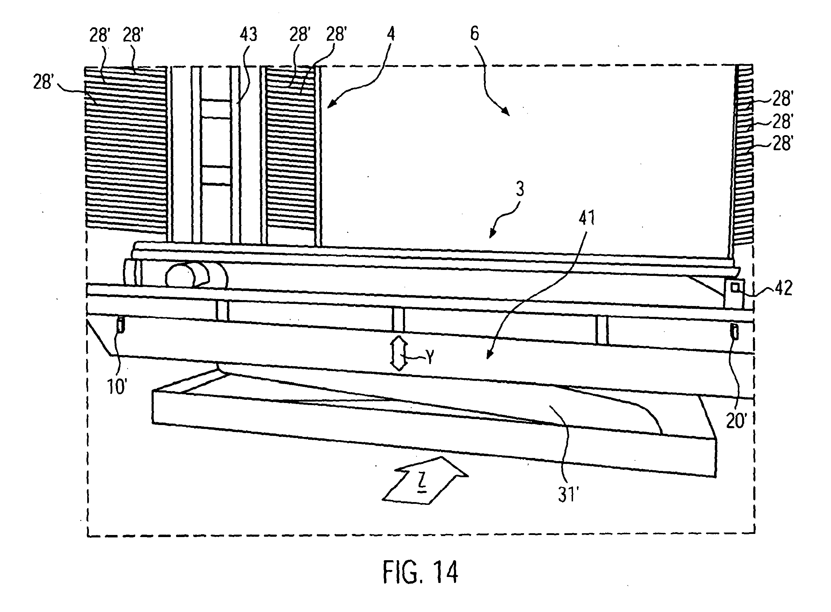

In Fig. 14 ist eine erfindungsgemäße Transfervorrichtung 3 in einer schematischen Perspektivansicht gezeigt. Die Transfervorrichtung 3 ist vor einer Beschickungs- und Entnahmeöffnung 6 eines Regallagers bzw. Lagerliftes 4 montiert.

Die Transfervorrichtung 3 ist auf einem Hubtisch montiert, der mit Hubscheren bzw. einem Hubmittel 31' versehen ist. Somit kann der Hubtisch 41 die Transfervorrichtung 3 auf eine gewünschte Lagerebene 28 eines Transportwagens 1 fahren, um auf verschiedenen Höhen Y auf dem Transportwagen 1 Lagergutträger 2 ein- oder auszulagern.

Ein Transportwagen 1 fährt in der Einschubrichtung Z an die Transfervorrichtung 3. Die Transfervorrichtung 3 besitzt Positionierungshilfen 19' und Positionsgeber 20', die als Gegenspieler zu den Positionierungshilfen 19 und Positionsgebern 20 des Transportwagens 1 ein genaues Positionieren des Transportwagens an der Transfervorrichtung 3 erleichtern.

So können die Positionierungshilfen 19 und Positionsgeber 20 an dem Transportwagen und die Positionierungshilfen 19' und Positionsgeber 20' an der Transfervorrichtung jeweils als einander zugeordnete Sensor-Geberpaare ausgestaltet sein. Die Positionierungshilfe 19' kann z. B. ein Sensor 19' sein, der auf einen Geber bzw. Positionsgeber 20 am Wagen 1 abgestimmt ist. Wiederum kann der Geber bzw. Positionsgeber 20' an der Transfereinrichtung 3 auf die Positionierungshilfe 19 am Wagen abgestimmt sein. Der Geber 20' an der Transfervorrichtung 3 kann melden, dass sich ein Wagen 1 vor der Transfervorrichtung 3 befindet. Der Geber 20 am Wagen kann anschließend eine Rückmeldung geben, ob der Ein- oder Ausladevorgang abgewickelt werden soll bzw. kann.

Als Sensor-Geberpaare sind beispielsweise induktive Näherungsschalter 20, 20' und entsprechende Magneten 19, 19' einsetzbar. Es ist darüber hinaus allerdings auch möglich, optische Sensoren oder sonstige Funk- oder Näherungssensoren einzusetzen.

Dementsprechend stellen die Positionierungshilfen 19 und Positionierungsgeber 20 am Transportwagen 1 Positionierungsmittel 19, 20 für die dem Lagerregal 4 zuordenbaren, als Gegenpositionierungsmittel 19', 20' ausgestalteten Positionierungshilfen 19' und Positionsgeber 20' dar.

Ferner besitzt die Transfervorrichtung 3 eine Datenübertragungseinrichtung 42. Die Datenübertragungseinrichtung 42 kann Informationen aus den Datenträgern 11 bzw. Logistikmodulen 32 am Transportwagen 1 bzw. seinen Lagerebenen 28 oder direkt an den Lagergutträgern 2 ein- und auslesen. Allerdings kann die Datenübertragungsvorrichtung 42 auch als zusätzliche Positionierungshilfe eingesetzt werden und beispielsweise behilflich sein, die entsprechenden Ladehöhen Y der Lagergutträger 2 auf dem Transportwagen 1 zu erfassen.

Darüber hinaus ist in Fig. 14 ersichtlich, dass sich hinter der Beschickungs- und Entnahmeöffnung 6 ein Lagerlift bzw. Lagerregal 4 mit diversen Lagerplätzen 28' und einem Vertikalführungssystem 43 für einen Vertikalförderer 36 befindet.

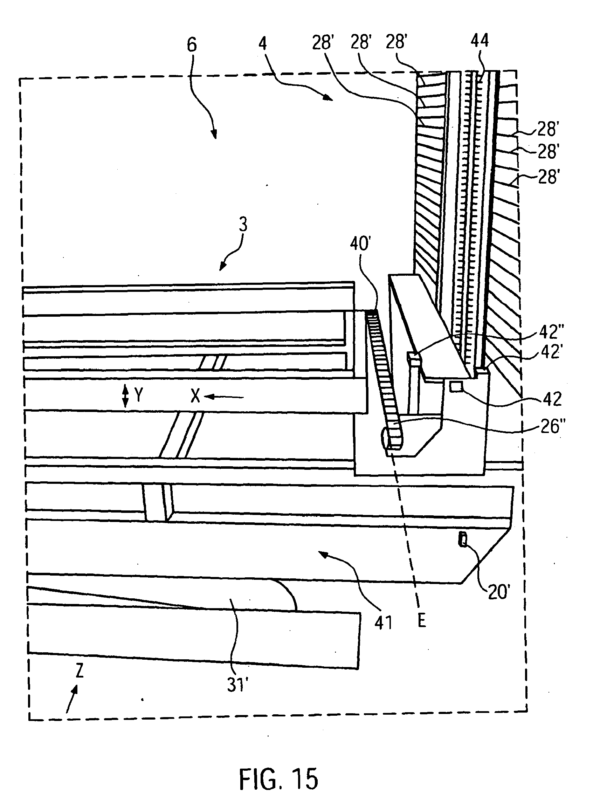

In Fig. 15 ist die erfindungsgemäße Transfervorrichtung 3 aus Fig. 14 in einer weiteren schematischen Perspektivansicht gezeigt. Hinter der Beschickungs- und Entnahmeöffnung 6 ist wiederum das Lagerregal 4 mit seinen Lagerplätzen 28 und einem Vertikalantrieb 44 für den Vertikalförderer 36 ersichtlich. Der Vertikalantrieb 44 kann direkt als Zahnstange in einer Wand des Lagerliftes 4, aber auch als einfacher Ketten-, Riementrieb oder eine sonstige Antriebseinrichtung ausgeführt sein, die einen Vortrieb des Vertikalförderers 36 ermöglicht.

Vor der Beschickungs- und Entnahmeöffnung 6 ist der in Höhenrichtung Y bewegliche Hubscherentisch 41 montiert. Mit seinen Hubscheren bzw. Hubmitteln 31' kann dieser die Arbeitsebene (E) der Transfervorrichtung 3 auf eine gewünschte Arbeits- bzw. Beschickungs-und Entnahmehöhe Y an dem Transportwagen 1 fahren. Anschließend dient ein Horizontalförderer 40' an der Transfervorrichtung dazu, die Lagergutträger 2 auf den Lagergutebenen 28 des Transportwagens1 ein- und auszulagern und zu dem Vertikalförderer 36 zu transportieren.

Auf dem Horizontalförderer 40' können Fanghaken bzw. Rastmittel 26" ausgeformt sein, welche die Ausschubsicherungen 7' oder sonstige Rasthilfen an den Lagergutträger hintergreifen können. Alternativ können Elemente des Horizontalförderers 40' auch die Griffleisten 34 oder die Ränder 7 der Lagergutträger 2 direkt hintergreifen oder an ihnen einrasten, um einen Lagergutträger aus seiner Lagerebene 28 auf dem Transportwagen 1 ein- oder auszuschieben.

Ferner besitzt die Transfervorrichtung 3 zusätzlich zur Datenübertragungseinrichtung 42 auch Datenübertragungseinrichtungen 42' und 42", die jeweils in Höherichtung Y und Seitrichtung X weisende Logistikmodule 32 bzw. Datenträger 11 am Transportwagen bzw. den Lagergutträgem erfassen und ein- sowie auslesen können.

Die Transfervorrichtung 3 kann vor einem bestehendem Lagerregal bzw. Lagerlift 4 montiert werden, um nicht ein bereits bestehendes Lagersystem umbauen zu müssen und trotzdem erfindungsgemäße Transportwagen 1 in einem erfindungsgemäßen Lagersystem 5 nutzen zu können.

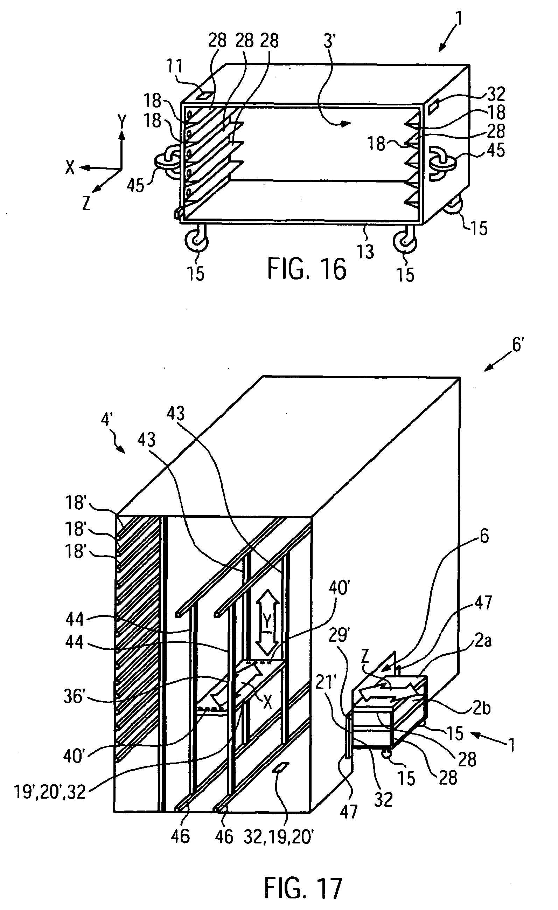

In Fig. 16 ist ein erfindungsgemäßer Transportwagen 1 in einer weiteren möglichen Ausgestaltungsform in einer schematischen Perspektivansicht gezeigt. Der Transportwagen 1 besitzt Einführhilfen 45. Diese Einführhilfen 45 in Form von seitlich angebrachten Einlaufrollen 45 erleichtern ein Heranführen des Transportwagens 1 an eine Transfereinrichtung 3 oder in einen wie in Fig. 17 gezeigten Lagerlift bzw. ein Regallager 4'.

In Fig. 17 ist ein erfindungsgemäßes Lagersystem 5' in einer schematischen Perspektivansicht gezeigt. Das Lagersystem 5' besitzt einen Lagerlift 4', der eine Beschickungs- und Entnahmeöffnung 6' besitzt, die als Einfahrt 6' für einen erfindungsgemäßen Transportwagen 1 ausgestaltet ist. Der Transportwagen 1 kann über die Einfahrt 6' direkt in den Lagerlift 4' einfahren.

In dem Lagerlift 4' kann der Transportwagen 1 an einen Vertikalförderer 36' heranfahren oder der Transportwagen wird über einem bzw. an einem Logistikmodul 32 bzw. Positionierungsmittel 19', 20', 32 positioniert und der Vertikalförderer 40' fährt zu dem Transportwagen 1. Dazu besitzt der Vertikalförderer 40' ein Horizontalverfahrsystem bzw. Horizontalschienen 46, mit Hilfe derer der Vertikalförderer 40 in Seitrichtung X in den Lagerlift 4' verfahren werden kann.

An den Vertikalförderer 40' ist ein weiteres Logistikmodul bzw. Positionierungsmittel 19', 20', 32 angebracht, welches sowohl als Datenübertragungseinrichtung 42 als auch als Positionsgeber 20' und/oder Positionierungshilfe 19' ausgeführt sein kann.

Die ohnehin an dem Vertikalförderer 40' vorhandene Vertikalführung 43 und ein entsprechendes Vertikalantriebssystem 44 ermöglichen es, den Vertikalförderer 36' auf eine entsprechende Lagerebene 28 an den Transportwagen 1 zu fahren, um dort die Lagergutträger 2a, 2b zu entnehmen oder einzulagern.

Nachdem der Vertikalförderer 36' die Lagergutträger 2a, 2b auf dem Transportwagen ein-oder ausgelagert hat, kann der Vertikalförderer 36' über sein Schienen- und Antriebssystem 43, 44, 46 zu den entsprechenden Lagerpositionen 28' in dem Lagersystem 5' fahren und weiter Lagergutträger 2 ein- und auslagern.

Um die Lagergutträger 2 von dem Transportwagen 1 ein- und auszulagern, besitzt der Vertikalförderer 36' eine Horizontalfördereinrichtung 40', welche die Lagergutträger 2 aus ihren jeweiligen Einschubpositionen bzw. Lagerebenen 28 an den Transportwagen ein- und ausschieben kann.

Um ein Ein- und Ausfahren des Transportwagens in das Lagerregal 4' zu erleichtern, besitzt der Transportwagen 1 die schon in Fig. 16 gezeigten Einführhilfen 45. Diese Einführhilfen 45 vereinfachen ein Einfahren des Transportwagens 1 in die Einfahrt 6' des Lagerregals 4'.

Dazu sind an dem Lagerregal 4' im Bereich der Einfahrt 6' seitlich zusätzliche Einlaufschrägen 47 bzw. Einlaufhilfen 47 angebracht. Diese Einlaufschrägen wirken wie ein Trichter, an dem der Transportwagen 1 in das Lagerregal 4' geführt wird.

Die Einlaufschrägen können zusätzlich mit in sowohl in Einschubrichtung Z als auch in Seitrichtung X weisenden Lichtschranken bzw. Lagerebenenerfassungselementen 29' ausgerüstet sein. Die Lichtschranken bzw. Lichtgitterelemente und Lagerebenenerfassungselemente 29' können auf dem Transportwagen 1 eingelagerte Lagergutträger 2 erfassen. Sie können aber auch ebenso behilflich sein, die Einfahrt eines Transportwagens 1 in das Lagerregal 4' zu melden oder einen Personenschutz gewährleisten.

Aus Personenschutzgründen sollte beispielsweise der Lagerlift nicht verfahren, sobald ein von Lichtgitterelementen 29' gebildetes Lichtgitter durch eine sich in der Einfahrt befindliche Person unterbrochen ist. So ist es auch möglich, ein solches Lichtgitter bzw. Lichtgitterelement 29' vor einer Transfervorrichtung 3 zu installieren, damit ein erfindungsgemäßes Lagersystem 5, 5' sich nahe oder in einer Beschickungs- und Entnahmeöffnung 6 bzw. Einfahrt 6' befindliche Personen erfassen kann und seinen Betriebsmodus dementsprechend anpasst oder den Betrieb gänzlich unterbricht.

Im Rahmen des Erfindungsgedankens sind Abweichungen von den oben beschriebenen Ausführungsformen möglich. So lassen sich die Elemente des Transportwagens 1, der Lagerlifte bzw. Regallager 4, 4' und der Transfervorrichtungen 3 sowie Lagergutträger 2 beliebig kombinieren und aufeinander abstimmen.

Beschickungs- und Entnahmeöffnungen 6 oder Einfahrten 6' können beliebig ausgestaltet werden, damit ein Transportwagen 1 an sie heran- bzw. in sie hineinfahren kann, um eine beliebige Anzahl von auf ihm beförderten Lagergutträgem bzw. Tablaren 2 ein- und auszuladen.

Der Rand 7 um die Lagerfläche 8 der Lagergutträger 2 kann beliebig ausgeformt werden, um die Lagerfläche 8 zu begrenzen oder als Griffleiste 34 zu fungieren, damit der Lagergutträger 2 von Hand oder mit Hilfe eines Mitnehmers 26" bzw. einer Horizontalfördereinrichtung 40 in einem Lagerregal oder auf einem Transportwagen 1 ein- und ausgeladen werden kann. Stützstege 9 können auf eine beliebige Art und Weise mit Schenkeln bzw. Backen 10 und 10' ausgeformt werden, damit der Lagergutträger 2 auf eine geeignete Art und Weise auf von beliebig ausformbaren Stützprofilen 18, 18' gebildeten Lagerebenen 28, 28' gehalten werden kann.

Datenträger 11, Positionierungshilfen 19, 19' und Positionsgeber 20, 20' können als Positionierungsmittel 19, 19', 20, 20' beliebig ausgestaltet sein, um ihre jeweilige Funktion zu erfüllen und beliebig zu Logistikmodulen 32 zusammengefasst werden, um einzeln oder gruppiert eine Andockstation im Bereich einer Beschickungs- und Entnahmeöffnung 6 oder in einer Einfahrt 6' zu bilden, an der ein mit einer beliebigen Anzahl von Datenträgern 11, Positionierungshilfen 19 und Positionsgebern 20, die ebenfalls zu Logistikmodulen 32 zusammengefasst sein können, ausgestatteter Transportwagen 1 heranfahren bzw. automatisch herangeführt und in Seit-, Einschub- und Höhenrichtung X, Z, Y ausgerichtet und exakt positioniert werden kann.

Diese Positionierung kann sowohl durch den Wagen selber als auch mit Hilfe von Transfervorrichtungen 3, Vertikalförderern 36, 36', Hubtischen 41, Hubmitteln 31, 31' und Rollen 15 an beliebig ausgestaltbaren Radaufhängungen 14 durchgeführt werden. Diese Elemente sind beliebig miteinander kombinierbar, um ein Ein- und Ausladen von Lagergutträgem 2 auf einer Mehrzahl von Lagerebenen 28 oder 28' auf einem Transportwagen in einem Lagerregal bzw. Lagerlift 4, 4' zu ermöglichen.

Dabei sind eine Vielzahl von beliebig ausführbaren Datenübertragungseinrichtungen 42 sowohl im Bereich einer Andockstation eines Lagerliftes 4, 4', seiner Beschickungs- und Entnahmeöffnung 6 oder Einfahrt 6' anordenbar oder alternativ auch an dem Transportwagen 1 oder einem den Transportwagen 1 antreibenden Triebwagen anbringbar, um Daten über die Art und Anzahl der auf dem Transportwagen 1 oder in den Lagerregalen 4, 4' ein-und auszulagernden bzw. vorhandenen Lagergutträger und den auf den Lagergutträgern gelagerten Güter zu übertragen bzw. aus Datenträgern 11 und Logistikmodulen 32 ein- und auszulesen.

Der Transportwagen kann mit einer beliebigen Anzahl von beliebig ausgestaltbaren Griffen bzw. Andock- oder Kupplungsmitteln 30 ausgestattet sein, damit er manuell oder durch einen automatischen oder personengeführten Triebwagen bewegt werden kann.

In einem selbstangetriebenen Transportwagen 1 können die Antriebseinheit 13', Verbindungen 13", Steuerungsmittel 14' und Antriebsmittel 15' beliebig untereinander sowie mit Positionierungshilfen 19, Positionsgebern 20, Logistikmodulen 32 und Datenübertragungseinrichtungen 42 kombiniert werden, um den Transportwagen 1 selbstständig in oder in die Nähe einer Übergabeposition U zu fahren. Dabei kann die Antriebseinheit 13' auch zum Antrieb bzw. zur Versorgung und Steuerung von Hubmitteln 31 verwendet werden.

Auf dem Transportwagen sind eine beliebige Anzahl von Lagerebenen 28 mit Scharnieren 23, flexiblen Elementen 24 und Stützen 25 auf Rahmenteilen 22 oder Vertikalstützen 17 anordenbar, um den jeweiligen Anforderungen an ein manuelles oder automatisches Beund Entladen von Lagergutträgem 2 und auf den Lagergutträgern 2 oder in auf den Lagergutträgem beliebig anorden- und ausgestaltbaren Kästen 21 gelagerte Lagergüter ein- und auszulagern.

Die Lagergutträger 2 können beliebig mit Ausschubsicherungen oder Fanghaken 7' versehen sein, die im Wesentlichen quer zu den möglichen Bewegungsrichtungen B des Wagens oder ein Einschubrichtungen Z wirken, so dass sie ein unbeabsichtigtes Ein- und Ausziehen eines Lagergutträgers aus einer Lagerebenen verhindern. Dies kann insbesondere erforderlich sein, wenn Lagergutträger 2 auf einem aus einer Verschlussposition V in eine Öffnungsstellung O überführbaren Rahmenteil 22 gelagert sind, von dem sie herabrutschen könnten.

Allerdings können beispielsweise als in die Lagergutträger 2 eingreifende Nocken oder Rastmittel ausformbare Ausschubsicherungen und Fanghaken 7, 26', 26" auch nützlich sein, um ein Herausrutschen des Lagergutträgers 2 beim Abbremsen des Wagens 1 bei einem Andockvorgang zu verhindern und bei dem Bestätigen einer Be- und Entladebereitschaft elektronisch und/oder mechanisch gelöst werden, damit ein oder mehrere Lagergutträger 2 aus einer Raststellung R in der sie gegen ein Herausziehen aus einer Lagerebene 28, 28' gesichert sind, freizugeben und in eine Transportbereitschaft T zu überführen.

Eine mechanische und/oder elektronische Bestätigung einer Raststellung R kann auch dazu genutzt werden, einen Transportwagen 1, eine Transfervorrichtung 3 oder einen Vertikalförderer 36, 36' freizugeben, so dass er erst bei einer bestätigten Raststellung R verfährt.

Eine elektronisch und/oder mechanisch zu bestätigende Transportbereitschaft T kann wiederum genutzt werden, damit auf einer Transfervorrichtung 3 oder einem Vertikalförderer 36, 36' sowie möglicherweise auch auf dem Transportwagen 1 selber montierte Horizontalfördereinrichtungen 40 zum Betrieb freigegeben werden, damit sie Lagergutträger 2 auf einen Transportwagen 1 oder in einem Lagerregal 4, 4' ein- und auslagern.

Während all diesen Vorgängen kann eine beliebige Anzahl von Lichtgitter- bzw. Lagerebenenerfassungselementen 29, 29' sowie Lichtgittern 29a und 29b eingesetzt werden, um beliebig eine ordnungsgemäße Positionierung, ein Vorhandensein, eine Raststellung R oder Transportbereitschaft T von Lagergutträgem 2 mit Hilfe an den Lagergutträgem 2 ausgeformten Fenstern 35 und Blenden 33 zu erfassen, und/oder die Höhe, Breite und/oder Tiefe von auf den Lagergutträgern 2 eingelagerten Lagergütern zu ermitteln.

Durch eine derartige Erfassung und Lagerguthöhenermittlung ist es möglich, den auf einem Transportwagen 1 in einem Lagerregal 4, 4' sowie auf Vertikalförderern 36, 36' zur Verfügung stehenden Lagerraum optimal auszunutzen und eine automatisierte Lagerverdichtung zu betreiben, bei der die Lagergutträger 2 den Abmaßen auf ihnen gelagerter Güter gemäß optimal über- und untereinander in Lagerebenen 28 auf dem Transportwagen 1 und in den Lagerregalen 4, 4' eingelagert werden.

Dabei ist der Abstand A zwischen den Lagerebenen bzw. Stützprofilen den jeweiligen Anforderungen gemäß wählbar, wobei es von Vorteil ist, wenn zusätzlich eine zweckmäßige Teilung t der Lichtschranken 29a, 29b realisiert werden kann. Wobei es wiederum von Vorteil ist, wenn an den Lagergutträgern 2 mit beispielsweise oberen und unteren Schenkeln 10, 10' der Stützstege mehrere Einlagemöglichkeiten geschaffen sind, die ein Vielfaches der durch die Lagerebenen 28, 28' mit dem Abstand A bereitgestellten Lagerplätze 28, 28' nutzen können.

Der Höhenunterschied ΔY zwischen den Lagergutträgem 2 kann sowohl dem Abstand A als auch den durch die oberen und unteren Schenkel 10, 10' erzielbaren Bruchteilen des Abstandes A entsprechen.

Die Stützprofile 18, 18' sind wiederum beliebig ausführbar, um ihren jeweiligen Zweck des Haltens eines Lagergutträgers 2 zu erfüllen. Sie können form- oder stoffschlüssig an Vertikalprofilen 17 oder auch Stützprofilen 18 eines Transportwagens 1, seinen Außenwänden 17' oder einem Rahmenteil 22 montiert werden. Allerdings ist es auch möglich, sie direkt in eine Seitenwand 17' des Wagens zu integrieren oder sie gar einstückig mit der Seitenwand 17' auszuformen, wobei sie beliebig aus Blechen oder sonstigen Materialien ausgeformt sein können.

## Patentansprüche

1. Verfahren zum automatischen Ein- und Auslagern von Lagergutträgern (2) in einem Lagerregal (4, 4'), bei dem wenigstens zwei Lagergutträger (2) in jeweils einer ersten und wenigstens einer anderen Lagerebene (28) übereinander auf einem Transportwagen (1) gelagert werden, der Transportwagen (1) an das Regallager (4, 4') herangefahren und in einer Übergabeposition (U) am Lagerregal (4, 4') positioniert wird, und anschließend in der Übergabeposition (U) die Lagergutträger (2) der ersten und dann der wenigstens einen anderen Lagerebene (28) in das oder aus dem Lagerregal (4, 4') ein- oder ausgelagert werden, wobei ein relativer Höhenunterschied (ΔY) zwischen einer Arbeitsebene (E) einer Übergabevorrichtung (3, 36, 36') und den jeweiligen Lagerebenen (28) der Lagergutträger (2) zum Ein- und Auslagern automatisch ausgeglichen wird, **dadurch gekennzeichnet, dass** wenigstens eine Lagerebene (28) des Transportwagens (1) zum Be- und Entladen einer darunter liegenden Lagerebene (28) von der darunter liegenden Lagerebene (28) weggeklappt wird.

2. Verfahren nach Anspruch 1, **dadurch gekennzeichnet, dass** die Übergabeposition (U) mit Hilfe eines Positionierungsmittels (19, 19', 20, 20') an dem Transportwagen (1) und/oder dem Lagerregal (4, 4') bestätigt wird.

3. Verfahren nach Anspruch 1 oder 2, **dadurch gekennzeichnet, dass** eine Entladebereitschaft des Transportwagens (1) mit Hilfe eines Positionierungsmittels (19, 19', 20, 20') an dem Transportwagen (1) und/oder dem Lagerregal (4, 4') bestätigt wird.

4. Verfahren nach einem der oben genannten Ansprüche, **dadurch gekennzeichnet, dass** der Transportwagen (1) automatisch in der Übergabeposition (U) positioniert wird.

5. Verfahren nach einem der oben genannten Ansprüche, **dadurch gekennzeichnet, dass** die Lagergutträger (2) mit Hilfe einer Horizontalfördereinrichtung (40) in die Lagerebenen (28) des Transportwagens ein- und/oder ausgeschoben werden.

6. Verfahren nach Anspruch 5, **dadurch gekennzeichnet, dass** vor dem Ein- und/oder Ausschieben der Lagergutträger (2) eine Ausschubsicherung (7') gelöst wird.

7. Verfahren nach einem der oben genannten Ansprüche, **dadurch gekennzeichnet, dass** spätestens in der Übergabeposition (U) ein Datenträger (11) an dem Transportwagen (1) und/oder den Lagergutträgern (2) ein- und/oder ausgelesen wird.

8. Verfahren nach einem der oben genannten Ansprüche, **dadurch gekennzeichnet, dass** bei der Annäherung des Transportwagens (1) an das Lagerregal (4, 4') Lichtgitterelemente (29') an dem Lagerregal (4, 4') eingeschaltet werden.

9. Verfahren nach Anspruch 8, **dadurch gekennzeichnet, dass** mit den Lichtgitterelementen (29') und/oder Lichtgitterelementen (29) an dem Transportwagen (1) das Vorhandensein von Lagergutträgern (2) auf der ersten und der wenigstens einen weiteren anderen Lagerebene (28) auf dem Transportwagen erfasst wird.

10. Verfahren nach Anspruch 9, **dadurch gekennzeichnet, dass** mit den Lichtgitterelementen (29') des Lagerregals (4, 4') und/oder den Lichtgitterelementen (29) des Transportwagens (1) eine Höhe von Lagergütern auf den Lagergutträgern (1) erfasst wird.

11. Verfahren nach einem der oben genannten Ansprüche, **dadurch gekennzeichnet, dass** die Übergabevorrichtung (3, 36, 36') und/oder die Lagerebenen (28) des Transportwagens (1) mit einem Hubmittel (31, 31', 43, 44) in einer Höhenrichtung (Y) verfahren werden, um die Lagergutträger (2) aus ihren jeweiligen Lagerebenen (29) aus dem Transportwagen (1) ein- oder auszulagem.

12. Verfahren nach einem der oben genannten Ansprüche, **dadurch gekennzeichnet, dass** der Transportwagen (1) in eine Einfahrt (6') in einem Lagerregal (4, 4') einfährt.

13. Verfahren nach Anspruch 12, **dadurch gekennzeichnet, dass** das Einfahren des Transportwagens (1) in die Einfahrt (6') mit wenigstens einer Einlaufhilfe (47) an der Einfahrt (6') geführt wird.

14. Verfahren nach einem der oben genannten Ansprüche, **dadurch gekennzeichnet, dass** bei einer Annäherung des Transportwagens (1) an die Übergabevorrichtung (3, 36, 36') die Genauigkeit der Ortsbestimmung des Transportwagens (1) erhöht wird.

15. Verfahren nach einem der oben genannten Ansprüche, **dadurch gekennzeichnet, dass** der Transportwagen (1) von einer externen Antriebseinheit an die Übergabevorrichtung (3, 36, 36') herangefahren wird.

16. Verfahren nach Anspruch 15, **dadurch gekennzeichnet, dass** die externe Antriebseinheit vor dem Bewegen des Transportwagens (1) an den Transportwagen (1) angekoppelt wird.

17. Verfahren nach Anspruch 16, **dadurch gekennzeichnet, dass** die externe Antriebseinheit spätestens in der Übergabeposition (U) des Transportwagens (1) abgekoppelt wird.

18. Transportwagen (1) zum Transportieren von Lagergutträgern (2) zu bzw. weg von einem Lagerregal (4, 4'), mit wenigstens zwei übereinander angeordneten Lagerebenen (28) für die Lagergutträger (2), mit einem Positionierungsmittel (19, 20), das auf eine dem Lagerregal (4, 4') zuordenbares Gegenpositionierungsmittel (19', 20') ausrichtbar ausgestaltet ist und durch das der Transportwagen (1) in einer definierten Übergabeposition (U) am Lagerregal (4, 4') positionierbar ist, wobei in der Übergabeposition (U) die Lagergutträger (2) nacheinander aus ihren Lagerebenen (29) ein- oder ausgelagert werden können, **dadurch gekennzeichnet, dass** wenigstens eine Lagerebene (28) über wenigstens ein Scharnier (23) klappbar an dem Transportwagen (1) befestigt ist.

19. Transportwagen (1) nach Anspruch 18, **dadurch gekennzeichnet, dass** der Transportwagen mit einem Datenträger (11) versehen ist, auf dem Informationen über wenigstens einen auf dem Transportwagen (1) gelagerten und/oder von dem Transportwagen angeforderten Lagergutträger ein- und/oder auslesbar sind.

20. Transportwagen (1) nach einem der Ansprüche 18 bis 19, **dadurch gekennzeichnet, dass** wenigstens eine Lagerebene (28) durch wenigstens ein Stützprofil (18) gebildet ist.

21. Transportwagen (1) nach einem der Ansprüche 18 bis 20, **dadurch gekennzeichnet, dass** das wenigstens eine Stützprofil (18) an einem Wandelement (17') ausgeformt ist.

22. Transportwagen (1) nach einem der Ansprüche 180 bis 21, **dadurch gekennzeichnet, dass** an wenigstens einer Lagerebene (28) mindestens ein Lichtgitterelement (29) angeordnet ist.

23. Transportwagen (1) nach einem der Ansprüche 18 bis 22, **dadurch gekennzeichnet, dass** der Transportwagen (1) ein Hubmittel (31) besitzt, mit dem wenigstens eine Lagerebene (28) des Transportwagens in einer Höhenrichtung (Y) verfahrbar ist.

## Claims

1. Method for automatically depositing and withdrawing stored goods carriers (2) in/from a storage rack (4, 4'), in which at least two storage goods carriers (2) are stored one above the other on a transport vehicle (1) in a first and at least one other storage level (28) respectively, the transport vehicle (1) is driven up to the rack storage (4, 4') and positioned in a transfer position (U) at the storage rack (4, 4'), and subsequently, in the transfer position (U), the storage goods carriers (2) of the first and then of the at least one other storage level (28) are deposited in or withdrawn from the storage rack (4, 4'), a relative difference in height (ΔY) between a working level (E) of a transfer device (3, 36, 36') and the respective storage levels (28) of the storage goods carriers (2) being automatically balanced for deposition and withdrawal, **characterised in that** at least one storage level (28) of the transport vehicle (1) is folded away from a storage level (28) located below for loading and unloading the storage level (28) located below.

2. Method according to claim 1, **characterised in that** the transfer position (U) is confirmed using a positioning means (19, 19', 20, 20') on the transport vehicle (1) and/or the storage rack (4, 4').

3. Method according to either claim 1 or claim 2, **characterised in that** a readiness of the transport vehicle (1) to unload is confirmed using a positioning means (19, 19', 20, 20') on the transport vehicle (1) and/or the storage rack (4, 4').

4. Method according to any one of the preceding claims, **characterised in that** the transport vehicle (1) is positioned in the transfer position (U) automatically.

5. Method according to any one of the preceding claims, **characterised in that** the storage goods carriers (2) are pushed into and/or out of the storage levels (28) of the transport vehicle using a horizontal conveying device (40).

6. Method according to claim 5, **characterised in that** an outward movement locking device (7') is released before the storage goods carriers (2) are pushed in and/or out.

7. Method according to any one of the preceding claims, **characterised in that**, at the latest in the transfer position (U), a data carrier (11) is read in and/or out at the transport vehicle (1) and/or the storage goods carriers (2).

8. Method according to any one of the preceding claims, **characterised in that** light grid members (29') on the storage rack (4, 4') are switched on as the transport vehicle (1) approaches the storage rack (4, 4').

9. Method according to claim 8, **characterised in that** the presence of storage goods carriers (2) on the first and the at least one further other storage level (28) on the transport vehicle is detected using the light grid members (29') and/or light grid members (29) on the transport vehicle (1).

10. Method according to claim 9, **characterised in that** a height of stored goods on the stored goods carriers (1) is detected using the light grid members (29') of the storage rack (4, 4') and/or the light grid members (29) of the transport vehicle (1).

11. Method according to any one of the preceding claims, **characterised in that** the transfer device (3, 36, 36') and/or the storage levels (28) of the transport vehicle (1) are moved in a vertical direction (Y) using a lifting means (31, 31', 43, 44), in order to deposit the stored goods carriers (2) or withdraw them from the transport vehicle (1) from their respective storage levels (29).

12. Method according to any one of the preceding claims, **characterised in that** the transport vehicle (1) drives into an entrance (6') in a storage rack (4, 4').

13. Method according to claim 12, **characterised in that**, when driving into the entrance (6'), the transport vehicle (1) is guided by at least one entry aid (47) at the entrance (6').

14. Method according to any one of the preceding claims, **characterised in that** the accuracy of the position finding of the transport vehicle (1) is increased as the transport vehicle (1) approaches the transfer device (3, 36, 36').

15. Method according to any one of the preceding claims, **characterised in that** the transport vehicle (1) is driven up to the transfer device (3, 36, 36') by an external drive unit.

16. Method according to claim 15, **characterised in that** the external drive unit is coupled to the transport vehicle (1) before the movement of the transport vehicle (1).

17. Method according to claim 16, **characterised in that** the external drive unit is uncoupled at the latest in the transfer position (U) of the transport vehicle (1).

18. Transport vehicle (1) for transporting storage goods carriers (2) to and away from a storage rack (4, 4'), comprising at least two storage levels (28) arranged one above the other for the storage goods carriers (2), comprising a positioning means (19, 20) configured so as to be alignable with a counter-positioning means (19', 20') which can be assigned to the storage rack (4, 4'), by which positioning means the transport vehicle (1) can be positioned in a defined transfer position (U) at the storage rack (4, 4'), it being possible in the transfer position (U) to deposit or withdraw the storage goods carriers (2) one after the other from their storage levels (29), **characterised in that** at least one storage level (28) is fixed to the transport vehicle (1) in a hinged manner by means of at least one hinge (23).

19. Transport vehicle (1) according to claim 18, **characterised in that** the transport vehicle is provided with a data carrier (11), on which information about at least one storage goods carrier stored on the transport vehicle (1) and/or requested by the transport vehicle can be read in and/or out.

20. Transport vehicle (1) according to either claim 18 or claim 19, **characterised in that** at least one storage level (28) is formed by at least one supporting profile (18).

21. Transport vehicle (1) according to any one of claims 18 to 20, **characterised in that** the at least one supporting profile (18) is formed on a wall member (17').

22. Transport vehicle (1) according to any one of claims 18 to 21, **characterised in that** at least one light grid member (29) is arranged on at least one storage level (28).

23. Transport vehicle (1) according to any one of claims 18 to 22, **characterised in that** the transport vehicle (1) has a lifting means (31) with which at least one storage level (28) of the transport vehicle (1) can be moved in a vertical direction (Y).

## Revendications

1. Procédé pour l'entrée et la sortie automatiques de supports de produits à entreposer (2) dans un rayonnage d'entreposage (4, 4'), selon lequel au moins deux supports de produits à entreposer (2) sont entreposés l'un sur l'autre sur un chariot de transport (1), respectivement dans un premier plan d'entreposage (28) et dans au moins un autre plan d'entreposage (28), le chariot de transport (1) est approché de l'entrepôt à rayonnages (4, 4') et est positionné au niveau de celui-ci, dans une position de transfert (U), puis dans ladite position de transfert (U) les supports de produits à entreposer (2) du premier plan (28) puis de l'autre ou des autres plans d'entreposage (28) sont entrés dans le rayonnage (4, 4') ou sortis de celui-ci, étant précisé qu'une différence de hauteur relative (ΔY) entre un plan de travail (E) d'un dispositif de transfert (3, 36, 36') et les plans d'entreposage (28) des supports (2) est compensée automatiquement pour l'entrée et la sortie, **caractérisé en ce qu'**au moins un plan d'entreposage (28) du chariot de transport (1), pour le chargement et le déchargement d'un plan d'entreposage (28) situé au-dessous, pivote pour s'éloigner dudit plan d'entreposage (28) situé au-dessous.

2. Procédé selon la revendication 1, **caractérisé en ce que** la position de transfert (U) est confirmée à l'aide d'un moyen de positionnement (19, 19', 20, 20') prévu sur le chariot de transport (1) et/ou sur le rayonnage d'entreposage (4, 4').

3. Procédé selon la revendication 1 ou 2, **caractérisé en ce qu'**une position d'attente de déchargement du chariot de transport (1) est confirmée à l'aide d'un moyen de positionnement (19, 19', 20, 20') prévu sur le chariot de transport (1) et/ou sur le rayonnage d'entreposage (4, 4').

4. Procédé selon l'une des revendications précédentes, **caractérisé en ce que** le chariot de transport (1) est positionné automatiquement dans la position de transfert (U).

5. Procédé selon l'une des revendications précédentes, **caractérisé en ce que** les supports de produits à entreposer (2) coulissent pour entrer dans les plans d'entreposage (28) du chariot de transport et/ou en sortir à l'aide d'un convoyeur horizontal (40).

6. Procédé selon la revendication 5, **caractérisé en ce qu'**avant l'entrée et/ou la sortie par coulissement des supports de produits à entreposer (2), une protection contre une sortie (7') est débloquée.

7. Procédé selon l'une des revendications précédentes, **caractérisé en ce qu'**au plus tard dans la position de transfert (U), un support de données (11) prévu sur le chariot de transport (1) et/ou sur les supports de produits à entreposer (2) est lu et/ou extrait.

8. Procédé selon l'une des revendications précédentes, **caractérisé en ce que** lorsque le chariot de transport (1) approche du rayonnage d'entreposage (4, 4'), des éléments photoélectriques (29') prévus sur ledit rayonnage (4, 4') sont activés.

9. Procédé selon la revendication 8, **caractérisé en ce que** grâce aux éléments photoélectriques (29') et/ou ou aux éléments photoélectriques (29) prévus sur le chariot de transport (1), la présence de supports de produits à entreposer (2) est détectée sur le premier et sur l'autre ou les autres plans d'entreposage (28) sur le chariot de transport.

10. Procédé selon la revendication 9, **caractérisé en ce que** grâce aux éléments photoélectriques (29') du rayonnage d'entreposage (4, 4') et/ou aux éléments photoélectriques (29) du chariot de transport (1), une hauteur de produits à entreposer placés sur les supports (2) est détectée.

11. Procédé selon l'une des revendications précédentes, **caractérisé en ce que** le dispositif de transfert (3, 36, 36') et/ou les plans d'entreposage (28) du chariot de transfert (1) sont déplacés dans le sens de la hauteur (Y) à l'aide d'un moyen de levage (31, 31', 43, 44) afin d'entrer et de sortir les supports de produits à entreposer (2) du chariot de transport (1) à partir de leurs niveaux d'entreposage (29) respectifs.

12. Procédé selon l'une des revendications précédentes, **caractérisé en ce que** le chariot de transport (1) entre dans une entrée (6') d'un rayonnage d'entreposage (4, 4').

13. Procédé selon la revendication 12, **caractérisé en ce que** l'entrée du chariot de transport (1) dans l'entrée (6') est guidée à l'aide d'au moins un accessoire d'introduction (47) prévu sur l'entrée (6').

14. Procédé selon l'une des revendications précédentes, **caractérisé en ce que** lorsque le chariot de transport (1) approche du dispositif de transfert (3, 36, 36'), la précision de la localisation du chariot de transport (1) est accrue.

15. Procédé selon l'une des revendications précédentes, **caractérisé en ce que** le chariot de transport (1) est approché du dispositif de transfert (3, 36, 36') par une unité d'entraînement externe.

16. Procédé selon la revendication 15, **caractérisé en ce que** l'unité d'entraînement externe est accouplée au chariot de transport (1) avant le déplacement de celui-ci.

17. Procédé selon la revendication 16, **caractérisé en ce que** l'unité d'entraînement externe est désaccouplée au plus tard dans la position de transfert (U) du chariot de transport (1).

18. Chariot de transport (1) pour amener des supports de produits à entreposer (2) vers un rayonnage d'entreposage (4, 4) et les éloigner de celui-ci, avec au moins deux plans d'entreposage (28) superposés pour les supports (2), et un moyen de positionnement (19, 20) qui est conçu pour pouvoir être dirigé vers un moyen de positionnement opposé (19', 20') apte à être associé au rayonnage d'entreposage (4, 4'), et grâce auquel le chariot de transport (1) est apte à être positionné au niveau du rayonnage (4, 4') dans une position de transfert (U) définie, étant précisé que dans la position de transfert (U), les supports de produits à entreposer (2) peuvent être entrés ou sortis de leurs plans d'entreposage (29) les uns après les autres, **caractérisé en ce qu'**au moins un plan d'entreposage (28) est fixé au chariot de transport (1) de manière à pouvoir pivoter sur au moins une charnière (23).

19. Chariot de transport (1) selon la revendication 18, **caractérisé en ce qu'**il est pourvu d'un support de données (11) sur lequel peuvent être lues et/ou extraites des informations sur au moins un support de produits à entreposer qui sont entreposés sur le chariot (1) et/ou demandés par celui-ci.

20. Chariot de transport (1) selon l'une des revendications 18 à 19, **caractérisé en ce qu'**au moins un plan d'entreposage (28) est formé par au moins un profilé d'appui (18).

21. Chariot de transport (1) selon l'une des revendications 18 à 20, **caractérisé en ce que** le ou les profilés d'appui (18) sont formés sur un élément de paroi (17').

22. Chariot de transport (1) selon l'une des revendications 18 à 21, **caractérisé en ce qu'**au moins un élément photoélectrique (29) est disposé sur au moins un plan d'entreposage (28).

23. Chariot de transport (1) selon l'une des revendications 18 à 22, **caractérisé en ce qu'**il a un moyen de levage (21) avec lequel au moins un plan d'entreposage (28) du chariot de transport est mobile dans le sens de la hauteur (Y).
